(19) **Europäisches Patentamt**

**European Patent Office**

**Office européen des brevets**

(11) **EP 0 996 004 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
*G01W 1/10* (2006.01)   *G01C 5/06* (2006.01)

(21) Anmeldenummer: **99810914.4**

(22) Anmeldetag: **07.10.1999**

(54) **Barometrisch kompensierter Höhenmesser, Barometer, Wettervorhersagesysteme und verwandte Verfahren einschliesslich Umgebungsdruckblasenfilterung**

Barometrically compensated altimeter, barometer and weather forecasting system

Altimètre à compensation barométrique, baromètre et système de prévision météorologique

(84) Benannte Vertragsstaaten:
**CH DE FR GB LI**

(30) Priorität: **20.10.1998 US 175238**

(43) Veröffentlichungstag der Anmeldung:
**26.04.2000 Patentblatt 2000/17**

(73) Patentinhaber: **ASULAB S.A.**
**2074 Marin (CH)**

(72) Erfinder: **Hermann, Jürgen, Dipl.-Ing.**
**9493 Mauren (LI)**

(74) Vertreter: **Ravenel, Thierry Gérard Louis et al**
**I C B**
**Ingénieurs Conseils en Brevets SA**
**Rue des Sors 7**
**2074 Marin (CH)**

(56) Entgegenhaltungen:
**DE-A- 4 102 923         JP-A- 5 281 368**
**US-A- 5 764 541**

• **PATENT ABSTRACTS OF JAPAN vol. 018, no. 436 (P-1786), 15. August 1994 (1994-08-15) & JP 06 137976 A (CASIO COMPUT CO LTD), 20. Mai 1994 (1994-05-20)**

**Beschreibung**

**GEBIET DER ERFINDUNG**

Das Gebiet dieser Erfindung betrifft Systeme und Verfahren zur barometrisch kompensierten Höhenmessung, insbesondere Konsumentenanwendungen von barometrisch kompensierten Höhenmessern, die in Armbanduhren, Sportausrüstungen sowie in Konsumgütern und -geräten integriert sind.

**STAND DER TECHNIK**

Nicht-barometrisch kompensierte Höhenmesser, denen es an Genauigkeit und Leistungsfähigkeit mangelt, sind entwickelt worden. Solche Höhenmesser umfassen Systeme, welche die von Wetteränderungen verursachten Änderung des barometrischen Drucks nicht ausgleichen. Solche Höhenmesser sind ungenau, weil sie die von Wetteränderungen, Auswirkungen der Sonne und gelegentlich erscheinenden Druckblasen verursachten Änderungen des barometrischen Drucks nicht ausgleichen.

Die Erwärmung und Abkühlung der Atmosphäre zwischen Tag und Nacht verursacht atmosphärische Druckänderungen von annähernd -4hPa (40m) vom frühen Morgen bis zum späten Nachmittag, sogar bei stabilen Hochdruckbedingungen. Zusätzlich schwankt der atmosphärische Druck in einem 12-Stundenrhythmus in einer negativen oder positiven Bandbreite von 1 - 2hPa (10 - 20 m) (die sogenannte halbtägliche atmosphärische Schwankung). Die Erwärmung der Atmosphäre löst des weiteren einen Rückgang des Umgebungsluftdrucks aus. Anstieg und Rückgang des barometrischen Drucks und die halbtägliche Schwankung (zusammenfassend als atmosphärische Gezeit bezeichnet) werden von bekannten Höhenmesserlesungen weder gemessen noch ausgefiltert. Auch wird die barometrische Tendenz (barometrische Druckänderung als Funktion von Wetteränderungen) weder gemessen noch prognostiziert, um den Höhenmesserwert zu korrigieren. Zur Zeit werden barometrische Tendenzen nicht verwendet, um Höhenmesseranzeigen zu korrigieren.

In der JP-A- 05281367 ist ein Verfahren zur Bestimmung von Wetterprognosenanzeigen offenbart, welches ein Messen der Temperatur, ein Messen des Umgebungsluftdrucks und eine Auswertung des gemessenen Umgebungsluftdrucks umfasst, wobei wiederholt Gradientenwerte, die jeweils der zeitlichen Änderung des Umgebungsluftdrucks entsprechen, erfasst werden und zur Unterscheidung zwischen Druckänderungen, die durch Höhenänderungen verursacht werden, und Druckänderungen, die von Wetteränderungen verursacht werden, die erfassten Gradientenwerte jeweils mit einem Grenzwert verglichen werden.

**ZUSAMMENFASSUNG DER ERFINDUNG**

Nach der vorliegenden Erfindung produziert ein Höhenmesser-Hardware- und Softwaresystem eine genaue Barometeranzeige mit einer Auflösung von etwa 0,05hPa (d. s. etwa 50 cm Luftsäule). Des weiteren wird gemäß einem Ausführungsbeispiel der vorliegenden Erfindung eine Prognoseanzeige geschaffen, die in Bewegung sowie bei stationärer Verwendung genau funktioniert. Ein Höhenmesser nach der vorliegenden Erfindung schafft demnach eine verbesserte Meßauflösung zur Wetterprognose. Nach der vorliegenden Erfindung berechnet der Höhenmesser die barometrische Tendenz von Druckveränderungen mit ausreichender Auflösung und Genauigkeit, um zwischen Druckänderungen durch Höhenveränderungen und solchen, die von Wetteränderungen verursacht wurden, zu unterscheiden. Nach der vorliegenden Erfindung verhindert ein benutzerfreundlicher Höhenmesser eine Verwirrung des Benutzers wegen unregelmäßiger Höhenmesseranzeigen, die durch Änderungen des barometrischen Drucks infolge Wetteränderungen, Sonneneinwirkung und Druckblasen zustande kommen.

Wetterprognosen werden mittels der Umgebungsdruckänderungen im Laufe der Zeit festgelegt. Der Höhenmesser nach der vorliegenden Erfindung unterscheidet zwischen Druckänderungen infolge von Wetterschwankungen und Druckänderungen, die von Höhenänderungen verursacht werden. Die Erfassung und Filterung von Drucksignalverzerrungen, die von Temperaturschwankungen verursacht wurden, wird nach der vorliegenden Erfindung ausgeführt.

Auch geringe barometrische Druckänderungen infolge geringfügiger Bewegungen (Höhenänderungen) und Temperaturschwankungen (Drucksensorfehlanzeigen) werden erfaßt und nach der vorliegenden Erfindung registriert. Um zwischen Höhen- und Temperaturänderungen sowie Druckänderungen infolge von Wetteränderungen unterscheiden zu können, wird nach der vorliegenden Erfindung eine Druckmeßauflösung von mindestens 0,05hPa/bit und eine Temperaturmeßauflösung von 0,125°C/bit erzielt und mit Algorithmen verarbeitet, die Fehlanzeigen und Sensorsignalverzerrungen ausfiltern.

Wenn das Höhenmessersystem drastischen Temperaturschwankungen ausgesetzt wird, beispielsweise beim Verlassen oder Betreten eines Gebäudes oder nach dem Öffnen eines Fensters, sind erfaßbare Drucksignalverzerrungen die Folge, die nach der vorliegenden Erfindung gemessen werden können. Wenn es nicht möglich ist, solche Temperaturänderungen zu kompensieren, beispielsweise wenn das Höhenmessergerät Temperaturänderungen ausgesetzt ist und sich noch nicht stabilisiert hat, wird der sich ergebende Drucksensorfehler gefiltert und nicht in die barometrischen Tendenzberechnungen aufgenommen. Die Bewegung des Barometers kann zu raschen, erheblichen Druckänderungen führen. Druckänderungen durch Bewegung eines Barometers auch nur kurze Distanzen nach oben oder nach unten werden für eine Barometertendenzberechnung ausgefiltert, um zutreffende Höhenmesseranzeigen nach der vorliegenden Erfindung zu erzielen. Wenn sich das Wetter von einem schönen Tag auf einen bewölkten Tag ändert, kann der Barometerdruck um 5 bis 6hPa (50 - 60 m) auf Meereshöhe, 4 bis 5hPa (40 - 50 m) 500 über dem Meeresspiegel und etwa 3 -4hPa (30 - 40 m) in Höhen von mehr als 1000 über dem Meeresspiegel fallen. Wenn ein Sturm, beispielsweise ein Hurrikan, sich nähert, kann der barometrische Druck um 50hPa oder 500 m Höhe fallen. Da die größtmögliche von Wetteränderungen verursachte Druckänderung 12hPa / 6 Stunden = 2hPa/h betragen kann, wenn ein Sturm kommt, wird dieser Wert als Maximalgradient verwendet (Maximalwert der atmosphärischen Druckänderung infolge Wetteränderung), um zwischen Höhenänderungen und Barometeränderungen zu unterscheiden. Insbesondere werden größere Gradienten als 2hPa/h = $\pm$ 20m/h als Höhenänderungen behandelt, weil ein Höhenmessersystem sich nicht über einen Zeitraum von einer Stunde mit einer Geschwindigkeit von 33 cm/min bewegen kann. Des weiteren werden nach der vorliegenden Erfindung Umgebungsdruckblasen erfaßt und aus der Ermittlung der barometrischen Tendenzen ausgefiltert, um fehlerhafte Höhenanzeigen und Bestimmungen sowie eine falsche Anzeige der Wetterprognose zu verhindern.

## KURZE BESCHREIBUNG DER ZEICHNUNGEN

Figur 1 ist ein Blockdiagramm eines Höhenmessersystems gemäß der vorliegenden Erfindung;

Figur 2A ist ein Diagramm, in dem die Unregelmäßigkeit des Umgebungsdrucks in den Stunden des Tages dargestellt wird, um die Wirkung der Sonnen auf den barometrischen Druck zu zeigen;

Figur 2B ist ein Diagramm einer Änderung des Umgebungsdrucks, der als eine gemäß der vorliegenden Erfindung aus der Bestimmung der barometrischen Tendenz herauszufilternde Umgebungsdruckblase identifiziert wird;

Figur 3 ist ein Diagramm von Softwaremodulen, die in Zusammenhang mit einem Höhenmessersystem gemäß einem Ausführungsbeispiel der vorliegenden Erfindung verwendet werden;

Figur 4 ist ein Flußdiagramm eines Mastersteuerungsprogramms gemäß einem Ausführungsbeispiel der vorliegenden Erfindung;

Figur 5 ist ein Flußdiagramm eines Verfahrens zur Anzeige von Druck gemäß einem Ausführungsbeispiel der vorliegenden Erfindung;

Figur 6 ist ein Flußdiagramm eines Verfahrens zur Anzeige von Temperatur gemäß einem Ausführungsbeispiel der vorliegenden Erfindung;

Figur 7A und 7B sind ein Flußdiagramm eines Höhenkompensationsalgorithmus gemäß einem Ausführungsbeispiel der vorliegenden Erfindung;

Figur 7C ist ein Flußdiagramm eines Blasen-Ausführungsverfahrens ("Do") gemäß der vorliegenden Erfindung;

Figur 7D ist ein Flußdiagramm eines Blasen-Prüfverfahrens gemäß der vorliegenden Erfindung;

Figur 7E ist ein Flußdiagramm eines Blasen-Anpassungsverfahrens gemäß der vorliegenden Erfindung;

Figur 8 ist ein Flußdiagramm eines Verfahrens zur Bewegungsprüfung gemäß einem Ausführungsbeispiel der vorliegenden Erfindung;

Figur 9 ist ein Flußdiagramm eines Verfahrens zur Datenberechnung gemäß einem Ausführungsbeispiel der vorliegenden Erfindung;

Figur 10 ist ein Flußdiagramm der Berechnung des barometrischen Drucks gemäß einem Ausführungsbeispiel der vorliegenden Erfindung;

Figur 11 ist ein Flußdiagramm eines Verfahrens zur Berechnung einer barometrischen Tendenz gemäß einem Ausführungsbeispiel der vorliegenden Erfindung;

Figur 12 ist ein Flußdiagramm eines Verfahrens zur Berechnung einer Tendenz 20 Minuten dividiert durch 4 gemäß einem Ausführungsbeispiel der vorliegenden Erfindung;

Figur 13 ist ein Flußdiagramm eines Verfahrens zur Berechnung von Schwankungen gemäß einem Ausführungsbeispiel der vorliegenden Erfindung;

Figur 14 ist ein Flußdiagramm eines Verfahrens zur Ausführung einer Einstundenberechnung gemäß einem Ausführungsbeispiel der vorliegenden Erfindung;

Figur 15 ist ein Flußdiagramm zur Bestimmung eines neuen Logos für das Wetter gemäß einem Ausführungsbeispiel der vorliegenden Erfindung;

Figur 16 ist ein Flußdiagramm zur Bestimmung der barometrischen Änderung gemäß einem Ausführungsbeispiel der vorliegenden Erfindung;

Figur 17 ist ein Flußdiagramm zur Zähleranpassung gemäß einem Ausführungsbeispiel der vorliegenden Erfindung;

Figur 18A ist ein Diagramm ausgewählter Displays und Funktionen eines Höhenmessers gemäß einem Ausführungsbeispiel der vorliegenden Erfindung;

Figur 18B ist ein Diagramm der Sichtfläche einer Uhr, in die ein Höhenmesser gemäß der vorliegenden Erfindung eingebaut ist, einschließlich einer Anzeige der Druckknöpfe, die zur Einstellung eines gewählten Betriebsmodus für Uhr und Höhenmesser betätigt werden können;

Figur 18C ist ein Diagramm zweiter und dritter Informationskategorien hinsichtlich des Betriebs einer Uhr gemäß einem Ausführungsbeispiel der vorliegenden Erfindung; und

Figur 19A - 19C sind Flußdiagramme eines Verfahrens gemäß einem Ausführungsbeispiel der vorliegenden Erfindung.

## DETAILLIERTE BESCHREIBUNG DES BEVORZUGTEN AUSFÜHRUNGSBEISPIELS

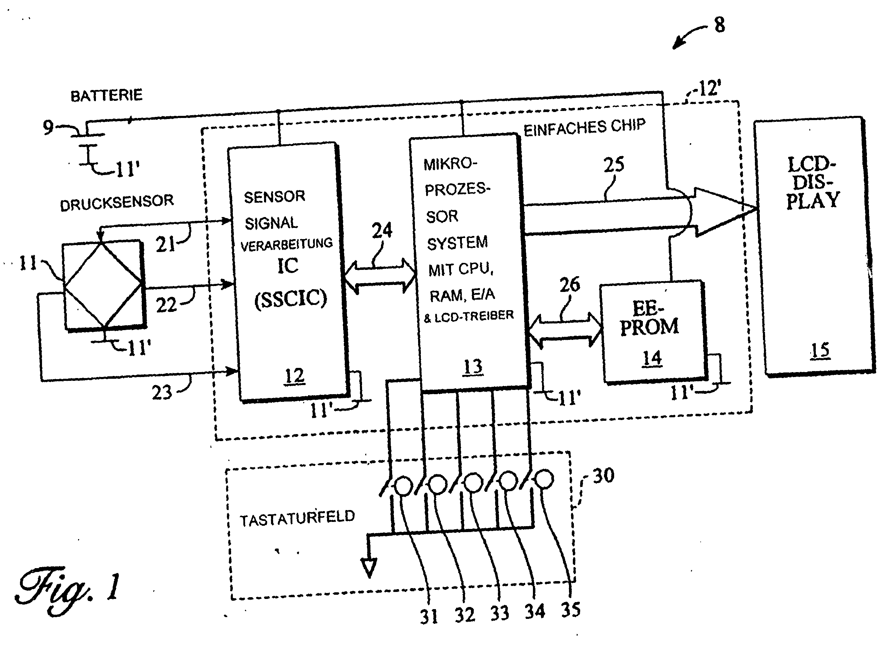

Figur 1 ist ein Blockdiagramm eines Höhenmessersystems 8 gemäß einem Ausführungsbeispiel der vorliegenden Erfindung. Insbesondere enthält das Höhenmessersystem 8 einen Drucksensor 11, einen integrierten Schaltkreis zur Signalbearbeitung 12 (SSCIC), wie beispielsweise beschrieben in US-Patent Nr. 5,764,541, das durch Bezugnahme einen Bestandteil dieser Patentschrift bildet, ein Mikroprozessorsystem 13, einen elektrisch löschbaren programmierbaren Nur-Lese-Speicher (EEPROM) 14 und ein Flüssigkristalldisplay (LCD) 15. Das Höhenmessersystem 8 umfaßt die elektrischen Leitungen 11', 21, 22 und 23 zum Messen der Umgebungstemperatur zwischen den Leitungen 21 und 11' und der Umgebungsdruckdaten zwischen den Leitungen 22 und 23. Das Höhenmessersystem 8 umfaßt die Busse 24, 25 und 26 zur Verbindung von SSCIC 12 und Mikroprozessor 13 (Bus 24), Mikroprozessor 13 und LCD 15 (Bus 25) und Mikroprozessor 13 und EEPROM 14 (Bus 26). Das Höhenmessersystem 8 umfaßt des weiteren ein Schaltsystem 30 mit einer Mehrzahl von jeweils mit dem Mikroprozessor 13 verbundenen Schaltern, die jeweils mittels der Druckknöpfe 31 - 35 zur Auswahl gewünschter Anzeigemodi und Betriebsarten des Höhenmessersystems 8 zu betätigen sind. Der Mikroprozessor 13 enthält eine zentrale Prozessoreinheit, einen Speicher mit wahlfreiem Zugriff (RAM), einen Nur-Lese-Speicher, Eingabe/Ausgabe-Schaltungsanordnung und eine LCD-Betriebsschaltung. SSCIC 12, Mikroprozessor 13 und EEPROM 14 sind auf einem einzigen Chip oder auf separaten Chips angeordnet, je nach dem Ausführungsbeispiel der vorliegenden Erfindung.

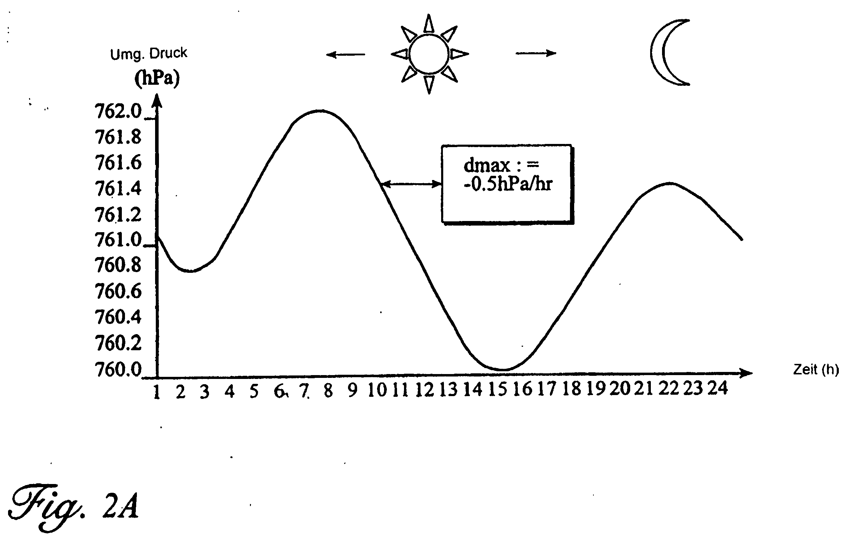

Figur 2A ist ein Diagramm des Umgebungsdrucks in Relation zur Uhrzeit des Tages, um die Auswirkungen der Sonne auf den barometrischen Druck darzustellen. Infolge solcher Wirkungen ändert sich die Höhenanzeige des Höhenmessersystems 8 ohne Kompensation gemäß einem Beispiel um +23m (-2,3hPa) von 8:00 morgens bis 15:00 nachmittag. Der maximale Gradient für eine Änderung pro Stunde auf der Grundlage von Sonnenwirkungen liegt bei etwa -0,4hPa/h. Dies entspricht einer Höhenänderung von etwa +4m/h.

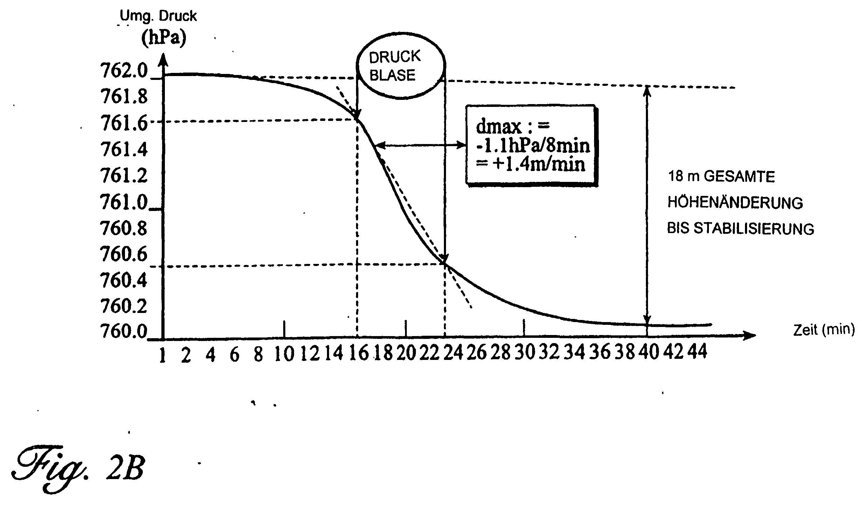

Figur 2B ist ein Diagramm einer Änderung des Umgebungsdrucks, die als eine aus den barometrischen Tendenzbestimmungen gemäß der vorliegenden Erfindung auszufilternde Umgebungsdruckblase identifiziert wird. Insbesondere während Zeiträumen von ausgewählter Dimension (z. B. 5 -10 oder 5 - 20 Minuten) werden Umgebungsdruckblasen identifiziert, bei denen sich der barometrische Druck um etwa 0,1 - 0,2hPa/Minute ändert, d. s. etwa 1 - 2 Meter/Minute als Zunahme oder Abnahme. Gemäß einem Ausführungsbeispiel der vorliegenden Erfindung werden solche Änderungen des barometrischen Drucks erfaßt und aus der barometrischen Tendenzberechnung und den auf dem Höhenmesserdisplay angezeigten Werten ausgefiltert. Figur 2B stellt eine Änderung eines barometrischen Drucks dar, die eine Niedrigdruckblase mit einem Gradienten von -1,1 ha/8 Minuten konstituiert. Dies entspricht 1,4 Meter/Minute, resultierend in einer anscheinenden Höhenzunahme von 18 Metern. Eine solche Bewegung oder Höhenänderung ist fehlerhaft und erfaßbar, und sie wird gemäß der vorliegenden Erfindung ausgefiltert. Aufgrund ihrer Eigenschaft einer Stabilisierung in kurzer Zeit kann die Umgebungsdruckblase mit einer barometrischen Drucktendenzmessung gemäß der vorliegenden Erfindung erfaßt werden, die in Zyklen von 1 - 2 Minuten aktualisiert wird und mit einem unmittelbar vorangehenden barometrischen Druckwert, der aufgezeichnet wurde, verglichen wird.

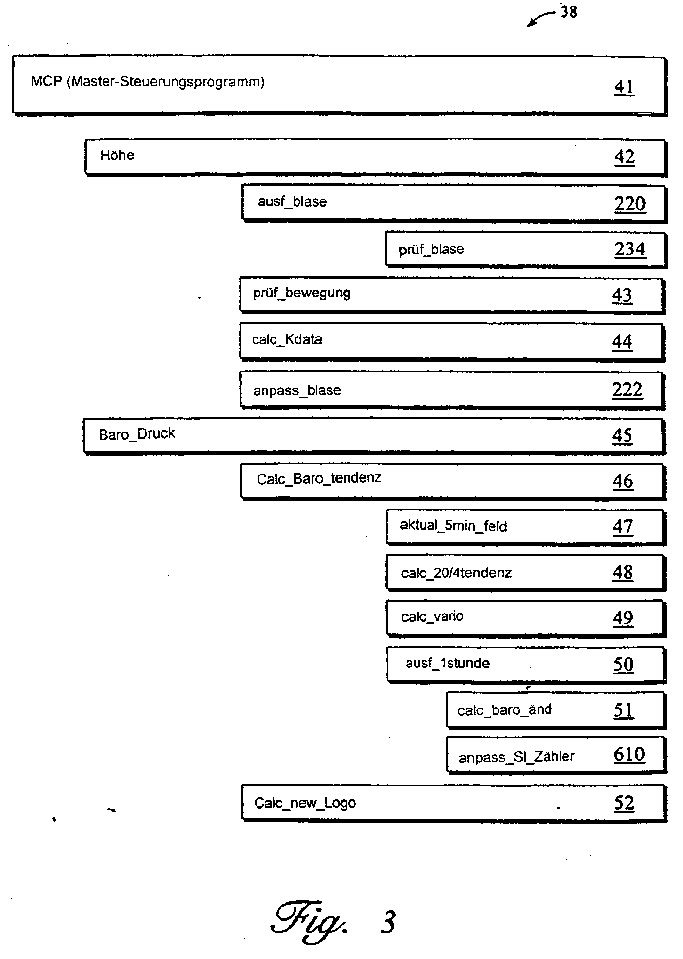

Figur 3 ist ein Diagramm der Module eines Softwaresystems 38, das in Zusammenhang mit einem Höhenmessersystem 8 gemäß einem Ausführungsbeispiel der vorliegenden Erfindung benützt wird. Insbesondere enthält das Softwaresystem 38 ein Mastersteuerungsprogramm 41, ein Höhenmodul 42, ein Blasen-Ausführungsmodul 220, ein Blasen-Prüfmodul 234, ein Bewegungsprüfmodul 43, ein calc_Kdata-Modul 44, ein Blasen-Anpassungsmodul 222, ein Barometerdruckmodul 45, ein barometrisches Tendenzberechungsmodul 46, ein Fünfminuten-Aktualisierungsfeldmodul 47, ein 20/4-Tendenzberechnungsmodul 48, ein Variomodul 49, ein Einstundenmodul 50, ein Modul zur Berechnung der barometrischen Änderung 51, ein Modul zur SL_Zähler-Anpassung 610 und ein Modul zur Berechnung des neuen Logos 52. Das Mikroprozessorsystem 13 verarbeitet das Softwaresystem gemäß der vorliegenden Erfindung 38 durch Laden und Ausführen der Softwarebefehle, die im Nur-Lese-Speicher auf dem Mikroprozessorsystem 13 gespeichert sind. EEPROM 14 wird zum Speichern sensorspezifischer Eichungsdaten, SSCIC-Setup- und Korrekturwerten und ausgewählter Display- und Datenprotokollierungsinformationen verwendet. Gemäß einem Ausführungsbeispiel der vorliegenden Erfindung operiert das Höhenmessersystem 8 gemäß der vorliegenden Erfindung mit einem erweiterten Höhenbereich - 500 bis +9000 Meter; ermöglicht die manuelle Einstellung der angezeigten Temperatur in 0,1°C-Schritten durch den Benutzer; umfaßt einen integrierten Piezoalarm zur Anzeige von Auf- und Abwindänderungen für Para-, Delta- und Segelflugzeugpiloten und enthält einen programmierbaren Audioalarm für Varioanwendungen. Vario wird gemäß der vorliegenden Erfindung gemessen in 0,5s-Zyklen mit einer Auflösung von 0,5m und wird über eine Sekunde gemittelt, um eine flimmerfreie Varioanzeige bei 0,25 Meter/sek Displayauflösungen zu ermöglichen. Die Wetterprognosen erfolgen gemäß der vorliegenden Erfindung mit sechs unterschiedlichen Logos zur Vorhersage und Anzeige lokaler Wetterprognosen innerhalb 12 bis 24 Stunden. Gemäß einem Ausführungsbeispiel der vorliegenden Erfindung kann der Benutzer die Barometeranzeige jederzeit anpassen, um den barometrischen Druck nach einem Anruf bei einer lokalen Wetterstation und dem Empfang des aktuellen barometrischen Drucks, wie er von dieser Station gemessen und wie er für die geometrische Höhe unter Bezugnahme auf ein Landmal, z. B. einen Gebirgspaß, einen Aussichtspunkt oder die Wetterstation selbst neuberechnet wurde, zu korrigieren. Ist die angezeigte Höhe korrekt, kann die Wettervorhersage manuell oder automatisch ausgelöst werden. Im Manuellmodus muß das aktuelle Wetterprognoselogo vom Benutzer nach den herrschenden Wetterbedingungen eingestellt werden, z. B. sonnig oder wolkig. Sechs bis zwölf Stunden später wird gemäß einem Ausführungsbeispiel der vorliegenden Erfindung eine erste gültige und zuverlässige Wetterprognose angezeigt. Im Automatikmodus wird eine erste gültige und zuverlässige Wetterprognose erst nach 24 Stunden produziert. Gemäß einem Ausführungsbeispiel der vorliegenden Erfindung werden das im EEPROM gespeicherte Maximum und Minimum der Barometerdrücke, P_QNH_max und P_QNH_min, für jede gemessene Höhe aufbewahrt. Durch Bezugnahme auf diese ROM-gespeicherten Drücke über einen festgelegten Zeitraum, z. B. 12 - 24 Stunden, können Wetterprognosen erstellt werden.

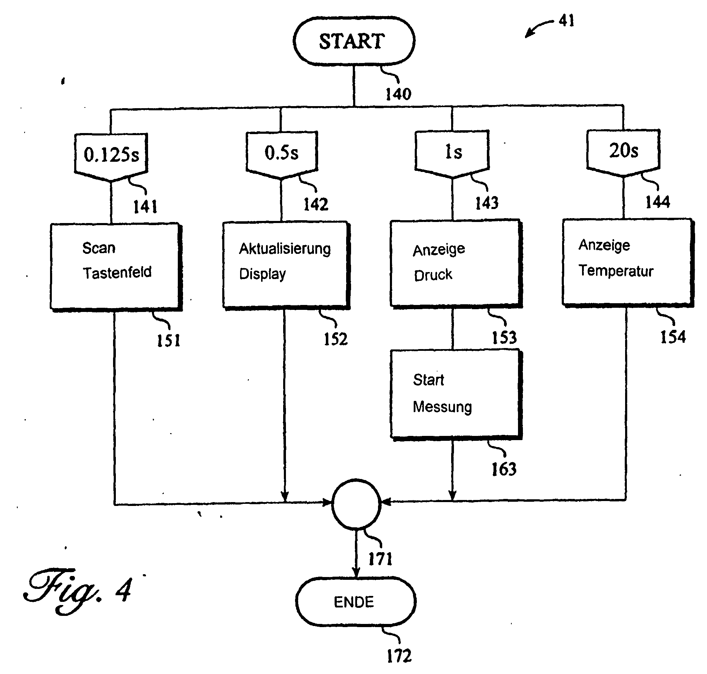

Figur 4 ist ein Flußdiagramm eines Mastersteuerungsprogramms 41 gemäß einem Ausführungsbeispiel der vorliegenden Erfindung. Insbesondere arbeitet das Mastersteuerungsprogramm 31 arbeitet in wiederholten 0,125-Sekundenzyklen 141, um ein Tastenfeld zu scannen 151; alle 0,5 Sekunden 142, um ein Display zu aktualisieren 152; jede Sekunde 143, um den Druck 153 vom Drucksensor 11 abzulesen und eine Messung für den Druck zu starten 163; und alle zwanzig Sekunden 144, um eine Temperaturablesung durchzuführen 154. Diese Zyklen gehen durch einen gemeinsamen Knoten 171 und enden 172 mit dem Abschluß der Routine.

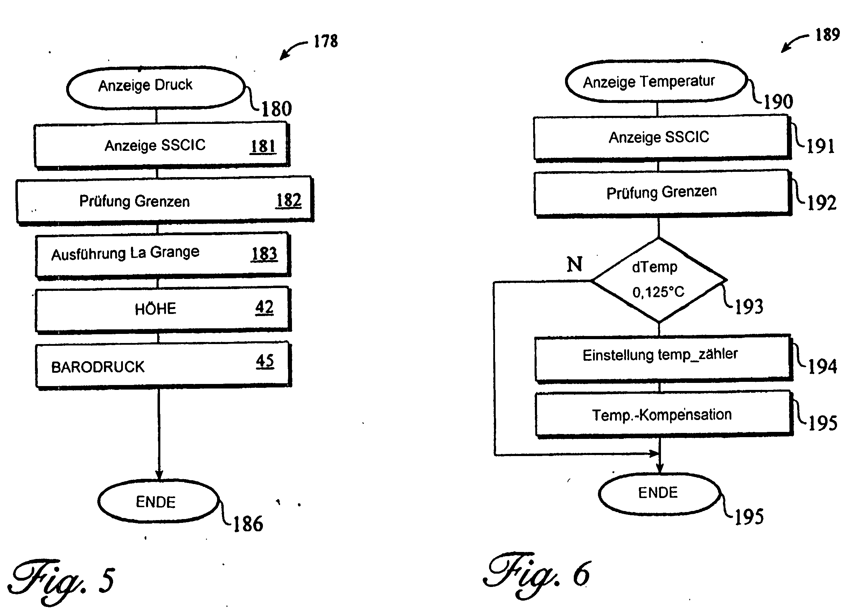

Figur 5 ist ein Flußdiagramm eines Verfahrens zur Anzeige von Druck 178 gemäß einem Ausführungsbeispiel der vorliegenden Erfindung. Insbesondere umfaßt die Anzeige von Druck 178 die Abnahme eines Druckwerts 180 mit dem Drucksensor 11 mittels Durchführung einer SSCIC-Ablesung 181, Prüfung der SSCIC-Grenzen 182, Durchführung der La-Grange-Operation 183 wie beispielsweise beschrieben in US-Patent Nr. 5,764,541, Ausführung einer Höhenberechnung 42, Berechnung des barometrischen Drucks 45 und Abschluß des Druckanzeigevorgangs zum Prozeßabschluß. Zur Verhinderung von Druckänderungen, die von Höhenmesserbewegungen und von Druckänderungen infolge von Temperaturwirkungen verursacht wurden, erfolgt eine Prüfung der zuletzt gemessenen Temperaturen sowie des zuletzt gemessenen Drucks. Je nach der Druckmeßstabilität (basierend auf Höhenanzeigeflimmern von ±0,5 m oder ±1 m oder sogar ±2 m) werden Bewegungen mit Wirkung auf die Höhe erfaßt, und der Flimmerbereich wird gefiltert (d. h. ignoriert), wobei ±1,5 m nicht überschritten werden. Für ein Höhenmessersystem 8 gemäß der vorliegenden Erfindung mit 1 m Displayauflösung und ±1 m Flimmerbereich sind Bewegungen feststellbar, wenn sich die Höhe innerhalb von 5 Minuten um mehr als 2,5 m geändert hat, einen Flimmerbereich von +1 m vorausgesetzt. Ein Sensorsignalbearbeitungsschaltkreis gemäß der vorliegenden Erfindung erfaßt 0,5 m Luftdruckänderung mit einem Flimmerbereich von ±0,5 m (max). Änderungen des Umgebungsluftdrucks von 0,15hPa, d. s. 1,5 m in 5 Minuten, sind Gegenstand einer Erfassung bei einer Auflösung von 18m/h. Dies ermöglicht eine Unterscheidung zwischen wetteränderungsbedingten Änderungen von Höhe und barometrischem Druck. Eine Bewegungsmarke gemäß der vorliegenden Erfindung zeigt an, daß der Höhenmesser sich bewegt, und schaltet auf einen internen Höhenmessermodus. Die Bewegungsmarke bleibt eingeschaltet, solange die Änderung des barometrischen Drucks in einem Zeitraum von fünf Minuten nicht unter 1,7 m (33 cm/Min) plus 1 m Flimmern beträgt. In diesem Fall wird die Bewegungsmarke gelöscht, und die interne Berechnung geht zurück in den Barometermodus. In einem Höhenmessermodus zeigt das Höhenmessersystem 8 weiterhin den infolge Höhenänderung geänderten Barometerdruck an. Die Berechnung der Wetterprognose verwendet den letzten gültigen Baro-Tendenzwert (Baro-Tendenz 20/4), wenn nicht innerhalb von 5 Minuten eine neue Baro-Tendenz infolge stationärer Verwendung oder horizontalen Bewegungen aufgezeichnet wird, welche ein Umschalten des Geräts vom Höhenmessermodus in den Barometermodus veranlaßt haben. Wird eine Bewegung festgestellt, so wird die letzte berechnete Baro-Tendenz (Durchschnitt der letzten 4 Baro-Tendenzwerte) verwendet, um Höhenmesser und Barometer zu kompensieren, und die Kompensation geht so lange weiter, bis die Bewegungsmarke gelöscht wird. Ist keine Bewegungsmarke gesetzt, wird der letzte über 5 Minuten gemessene Baro-Tendenzwert zur Höhenbestimmung herangezogen. Wenn sich die Temperatur um mehr als 0,125°C ändert, wird die Temperaturkompensation angezeigt, und die Drücke vor und nach der Temperaturkorrektur werden verglichen. Wenn der Unterschied zwischen diesen gemessenen Drücken substantiell ist, wird er in Höheneinheiten neu berechnet, invertiert und dem Wert ALT_Corr hinzugefügt, der zur Kompensation des Höhenmessersystems 8 verwendet wird. Dies glättet Höhenberechnungsfehler während der Temperaturkompensations-Datenfeldschaltung. Der Baro-Tendenzwert oder die akkumulierte Differenz des Wertes des barometrischen Drucks wird automatisch gelöscht, nachdem die Temperatur stabilisiert oder auf ein früheres Temperaturkompensations-Datenfeld zurückgeschaltet wurde. Druck- und Höhenänderungen, die von Temperaturänderungen verursacht wurden, werden auf diese Weise vernachlässigt. In einem Baro-Modus gemäß einem Ausführungsbeispiel der vorliegenden Erfindung mißt das Höhenmessersystem 8 den Druck und die Temperatur nur alle 2 Minuten, um einen Energiesparmodus aufrecht zu erhalten. Wenn ein Tastenfeld gedrückt oder die Bewegungsmarke gesetzt wird, beginnt der Höhenmesserzyklus mit dem Messen des Drucks und der Temperatur in Einsekundenzyklen, es sei denn, die Bewegungsmarke wird gelöscht oder der Barometermodus war bereits in den letzten zwei Minuten eingeschaltet. Die Änderung des barometrischen Drucks wird gemessen, gemittelt und in der Variablen BAROTENDENZ20/4 aufgezeichnet, bei der es sich entweder um die Baro-Tendenz in den letzten 5 Minuten oder den Durchschnitt der letzten 4 ermittelten Baro-Tendenzwerte handelt, je nach Bewegungsmarke. Diese Berechnung wird dazu verwendet, Wetterprognosen zu erstellen und die Höhenmesseranzeige für Änderungen des barometrischen Drucks zu kompensieren. Bei einer maximalen Änderung des barometrischen Drucks gemäß der vorliegenden Erfindung von 2hPa/h = 33 cm/Min ist der maximale Wettergradient, basierend auf einer Probenahmefrequenz von 5 Minuten und einer Meßauflösung von 0,5 m, ausreichend, um Änderungen des barometrischen Drucks und der Höhe innerhalb von 5 bis 20 Minuten zu erfassen und zu unterscheiden. Um die Präzision der Gradientmessung und Berechnungen zu erhöhen, wird die Probe in 5-Minutenzyklen genommen, die über 20 Minuten kontinuierlich gemittelt werden, um sie als BAROTENDENZ20/4 zu speichern und als Barometertendenz in hPa/h anzuzeigen. Wenn BAROTENDENZ20/4 auf Null bleibt, wird die Änderung des barometrischen Drucks als Null erachtet. Wenn der Höhenmesser in Verwendung ist (d. h. sich bewegt), wird der letzte gültige Gradient, der auf Basis der letzten vier Baro-Tendenzwerte errechnet wurde, die jeweils in 5-Minutenzyklen gemessen und über 20 Minuten als BAROTENDENZ20/4 gemittelt wurden, dazu verwendet, den Höhenmesser gegenüber den Änderungen des barometrischen Drucks zu kompensieren. Während Stopps und Pausen berechnet das Höhenmessersystem 8 neue BAROTENDENZ20/4-Werte innerhalb von 5 bis 20 Minuten. Barometrische Wetterprognosen gemäß der vorliegenden Erfindung werden produziert und die Höhe wird korrigiert, basierend auf der Barometertendenz unter statischen Bedingungen, d. h. wenn sich das Gerät nicht bewegt.

Figur 6 ist ein Flußdiagramm eines Verfahrens zur Anzeige der Temperatur 189 gemäß einem Ausführungsbeispiel der vorliegenden Erfindung. Insbesondere umfaßt die Anzeige der Temperatur 189 eine Temperaturabnahme 190 durch Ermitteln der Spannungsdifferenz zwischen den Leitungen 21 und 11' am Drucksensor 11 (entsprechend der Durchführung einer Temperaturmessung gemäß US-Patent Nr. 5,764,541) mit SSCIC 191, Prüfung der SSCIC-Grenzen 192, Feststellung 193, ob eine Temperaturänderung von mehr als 0,125°C stattgefunden hat, und wenn ja, Einstellen eines Temperaturzählers 194 und Durchführung einer Temperaturkompensation 195. Hat keine solche Temperaturänderung stattgefunden, wird der Temperaturzähler nicht eingeschaltet und keine Temperaturkompensation durchgeführt. Dann wird die Temperaturanzeige beendet 195.

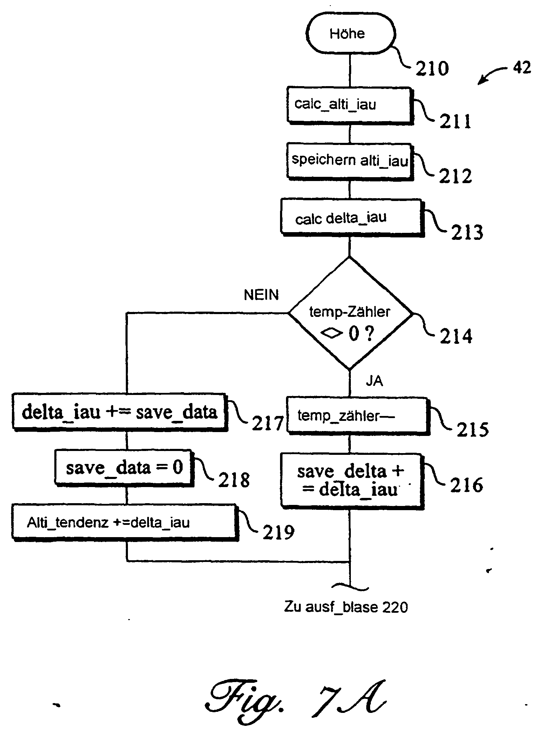

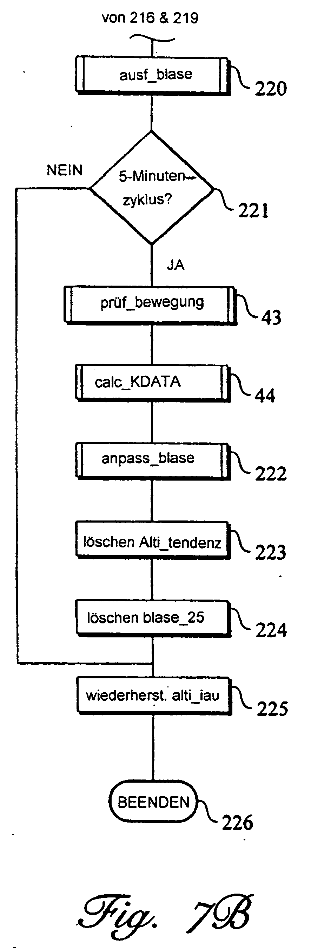

Figur 7A und 7B sind Flußdiagramme eines Höhenkompensationsalgorithmus 42 gemäß der vorliegenden Erfindung. Insbesondere enthält der Höhenkompensationsalgorithmus 42 den Start der Höhenkompensation 210 durch Berechnung der Höhe 211, Speichern des Ergebnisses der Höhenberechnung 212, Berechnen des Höhendifferentials 213, Prüfen des Temperaturzählers 214 auf Nicht-Nullwerte, und wenn ein solcher Nicht-Nullwert gefunden wird, Speichern des Temperaturzählers 215 und Speichern des Temperaturdeltas 216. Wenn keine Nicht-Null-Temperaturzählung gefunden wird 214, wird ein delta_iau gespeichert 217, ein Wert save_data wird auf Null gesetzt 218 und ein Höhentendenzwert wird auf ein Wertniveau delta_iau gesetzt 219. Als nächstes wird, wie in Figur 7B dargestellt, ein Blasen-Ausführungsverfahren gemäß der vorliegenden Erfindung durchgeführt 220. Dann wird geprüft 221, ob ein 5-Minuten-Zyklus vollständig ist, und wenn dies der Fall ist, wird eine Bewegungsprüfung 43, eine Berechnung der Höhenkorrekturdaten 44 und ein Blasen-Anpassungsverfahren 222 gemäß der vorliegenden Erfindung durchgeführt, ein Höhentendenzwert wird gelöscht 223 und der aktuelle Blasenwert wird gelöscht 224. Wenn der 5-Minutenzyklus noch nicht abgeschlossen ist, wird keine Bewegungsprüfung und keine Berechnung der Höhenkorrekturdaten durchgeführt und kein Höhentendenzwert gelöscht. Unabhängig davon, ob der 5-Minutenzyklus abgeschlossen wurde, wird ein Höhenwert wiederhergestellt 225 und die Höhenberechnung wird durch eine Beendigung abgeschlossen 226.

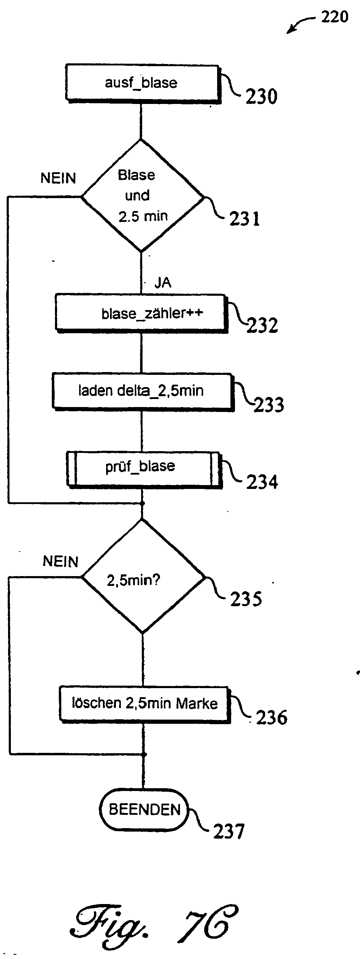

Figur 7C ist ein Flußdiagramm eines Blasen-Ausführungsverfahrens gemäß der vorliegenden Erfindung. Insbesondere umfaßt das Blasen-Ausführungsverfahren 220 den Start des Blasen-Ausführungsprozesses 230 durch Prüfen 231 auf den Blasenwert und 2,5 Minuten. Wird ein positives Ergebnis gefunden, so wird ein Blasenzähler um den Wert eins erhöht 232, und eine Delta 2,5 Minute wird geladen 233, gefolgt von einem Blasen-Prüfverfahren 234. Wenn kein positives Ergebnis gefunden wird, werden die Blasenzählererhöhung, die Delta 2,5 Minutenladung und die Blasen-Prüfverfahren nicht durchgeführt. Als nächstes wird eine 2,5-Minutenprüfung ausgeführt 235. Wenn 2,5 Minuten vergangen sind, wird die 2,5-Minutenmarke gelöscht 236. Ist die 2,5-Minutenperiode nicht vergangen, wird abgebrochen 237.

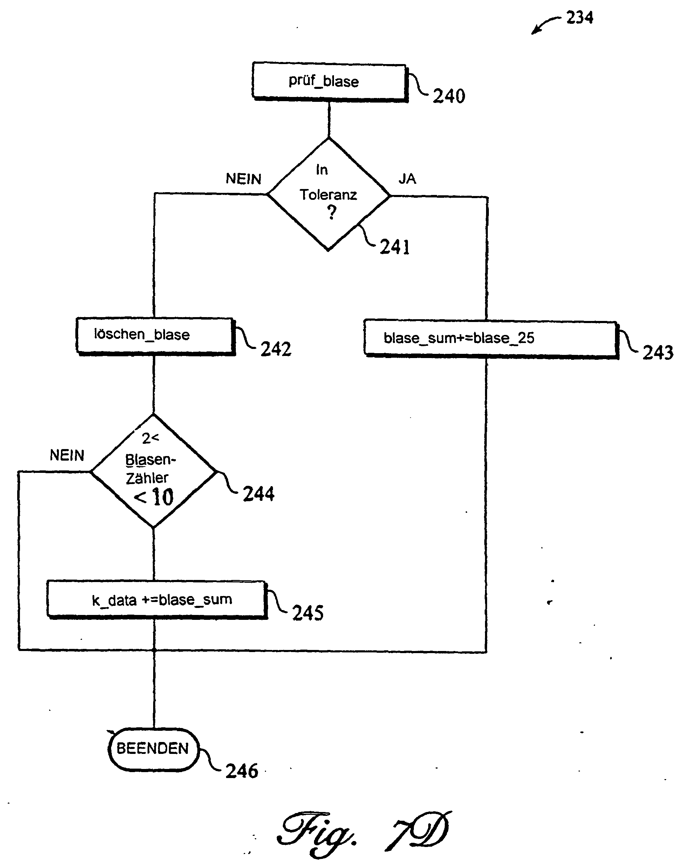

Figur 7D ist ein Flußdiagramm eine Blasen-Prüfverfahrens gemäß der vorliegenden Erfindung. Insbesondere umfaßt das Blasen-Prüfverfahren 234 gemäß der vorliegenden Erfindung den Start des Blasen-Prüfprozesses 240 durch Prüfen 241, ob der Blasenprüfwert sich in einem vorbestimmten Toleranzbereich befindet. Ist dies der Fall, wird der Blasensummenwert um einen Wert blase_25 erhöht 243 und die Verarbeitung wird bis zur Beendigung abgeschlossen 246. Befindet sich der Blasenprüfwert nicht im Toleranzbereich, wird die Blasenmarke gelöscht 242. Dann wird geprüft 244, ob ein Blasenzähler einen Wert zwischen 2 und 10 hat. Wenn ja, wird der Höhenkorrekturwert von k data um den Wert der akkumulierten Blasensumme erhöht 245. Liegt der Blasenzähler nicht zwischen 2 und 10, wird abgebrochen 246.

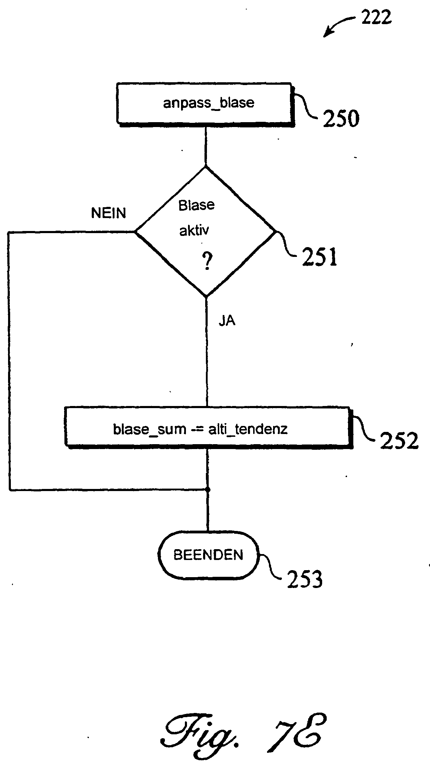

Figur 7E ist ein Flußdiagramm eines Blasen-Anpassungsverfahrens gemäß der vorliegenden Erfindung. Insbesondere umfaßt das Blasen-Anpassungsverfahren 222 gemäß der vorliegenden Erfindung den Start des Blasen-Anpassungsprozesses 250 durch Prüfung 251, ob der Blasenprozeß aktiv ist. Wenn ja, wird die Blasensumme um die Höhentendenz 252 verringert. Wenn nicht oder nach Einstellung der Blasensumme auf diese Weise wird der Prozeß abgebrochen 253.

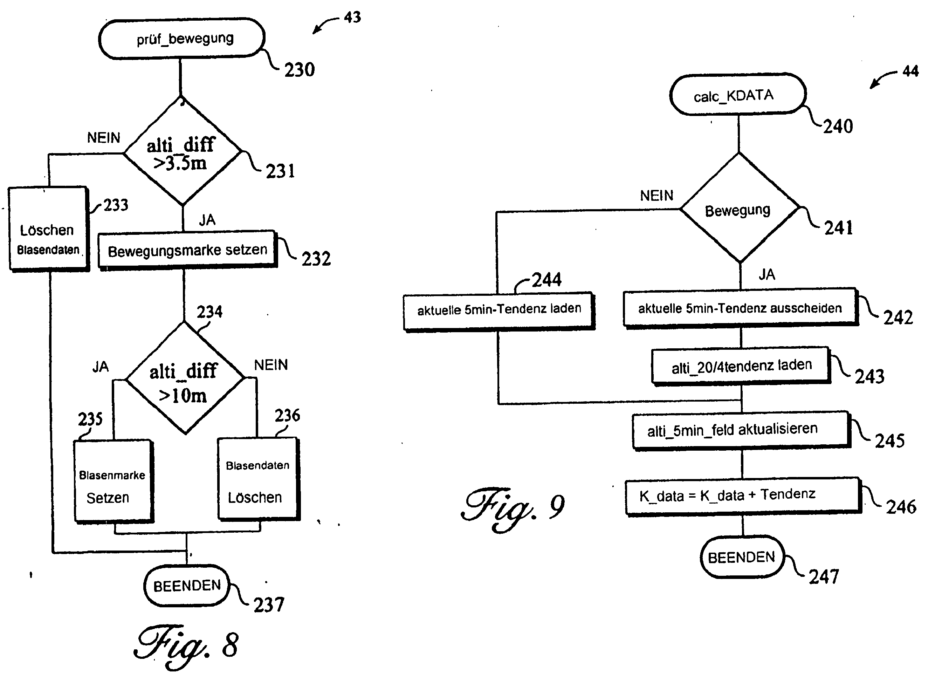

Figur 8 ist ein Flußdiagramm eines Verfahrens zur Prüfung der Bewegung 43 gemäß einem Ausführungsbeispiel der vorliegenden Erfindung. Insbesondere umfaßt die Prüfung der Bewegung 43 das Starten einer Bewegungsprüfroutine 230 und die Suche nach einem Höhendifferential von mehr als dreieinhalb Metern. Wenn dies gegeben ist, wird eine Bewegungsmarke gesetzt 232. Wenn dies nicht gegeben ist, werden die Blasendaten gelöscht. Nachdem die Bewegungsmarke gesetzt wurde 232, wird die Blasenmarke gesetzt 235, wenn die Höhendifferenz weniger als zehn Meter beträgt. Ist die Höhendifferenz nicht weniger als zehn Meter, nachdem die Bewegungsmarke gesetzt wurde, werden die Blasendaten gelöscht 236. Danach wird abgebrochen 237.

Figur 9 ist ein Flußdiagramm eines Verfahrens zur Berechnung von Daten 46 gemäß einem Ausführungsbeispiel der vorliegenden Erfindung. Insbesondere umfaßt die Berechnung von Daten 44 die Aufnahme einer Berechnungsroutine 240 und Suche nach einer Bewegungsmarke 241, und wenn die Bewegungsmarke gesetzt ist, Ermittlung eines 20/4-Minuten-Höhentendenzwerts mittels einer zugehörigen Datenladung 243. Wenn keine Bewegung entdeckt wurde, wird der aktuelle 5-Minuten-Tendenzwert geladen 244, und nicht eine 20/4-Minutentendenz. In beiden Fällen wird ein 5-Minuten-Höhenfeldwert aktualisiert, und der Wert der Höhenkorrekturdaten wird aktualisiert, wobei der Höhentendenzwert 246 vom Routineabbruch 247 gefolgt wird.

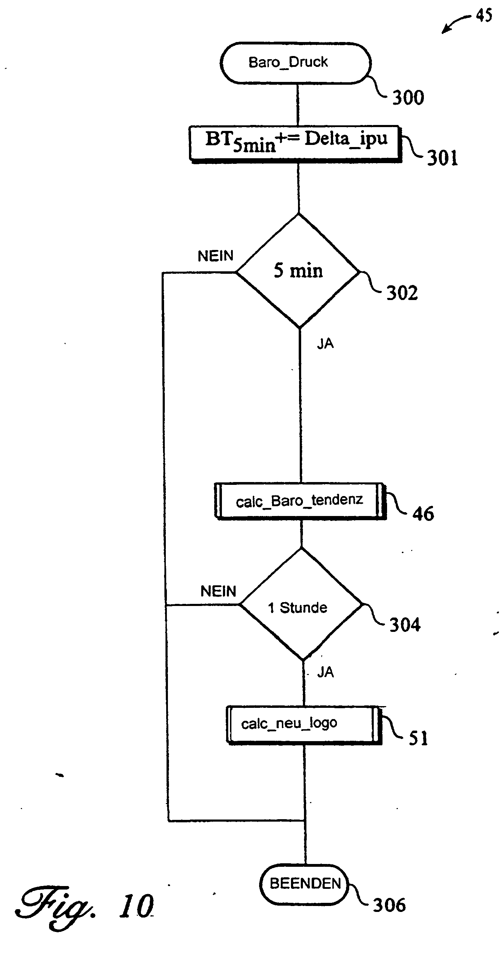

Figur 10 ist ein Flußdiagramm der Berechnung des barometrischen Drucks 45 gemäß einem Ausführungsbeispiel der vorliegenden Erfindung. Insbesondere umfaßt die Berechnung des barometrischen Drucks 45 das Starten einer barometrischen Druckroutine 300, indem ein 5-Minutenwert der barometrischen Tendenz gleich einem Deltawert gesetzt wird 301, geprüft wird 302, ob 5 Minuten vergangen sind, und wenn dies der Fall ist, Berechnung 353 der barometrischen Tendenz 46 und dann Prüfung, ob eine Stunde vergangen ist 304, und wenn ja, Berechnung eines neuen Wetterlogos 51 zur Anzeige. Wird keine Bedingung erfüllt, endet die barometrische Druckroutine mit einem Abbruch.

Folgende Variablen werden gemäß der vorliegenden Erfindung definiert:

| | |
|---|---|
| BARO | aktueller barometrischer Druck (wird angezeigt) |
| P_BARO | barometrischer Druck, bestimmt als f(BARO, Zeit und feste Grenzwerte) zur Auswahl von Wetterlogos. |
| P_QNH_min | Pmin (barometrisches Minimum) |
| P_QNH_max | Pmax (barometrisches Maximum) |
| Pdiff=Pmax-Pmin | 12hPa (im folgenden Beispiel) |
| Pstep = Pdiff/6 | 2,0 hPa (im folgenden Beispiel) |
| Hyst | 0,2hPa (feste Hysterese zur Verhinderung des Hin- und Herschaltens von Wetterlogos) |

Die angezeigte Wetterlogo-Prognosetabelle und die Formeln werden aufgrund folgender Informationen bestimmt:

Hinaufschalten um ein Logo bei P_Baro>Pup(i), wenn Pup(i) = Pmin + (Pdiff/6), für i = 1 bis 6.
Hinaufschalten um ein Logo bei P_Baro<Pdwn(i), wenn Pdwn(i) = Pmin + (Pdiff - i*Pdiff/6 - Hyst), für i = 1 bis 16.
Insbesondere werden Codewechsel in Entsprechung zu der folgenden Tabelle ausgeführt:

**TABELLE A <u>Codewechsel</u>**

| Wetter-Code (i) | Wetterlogo | Codewechsel bei P_Baro>Pup Pup(i) | Codewechsel von → auf | Codewechsel bei P_Baro<Pdwn Von > auf Pdwn(i-1) | Code-wechsel Von → auf |
|---|---|---|---|---|---|
| 1 | Nur Sonne | Pmin + 10,0hPa | 2→1 | | |
| 2 | Sonnen mit Wolken | Pmin + 8,0hPa | 3→2 | Pmin + 9,8hPa | 1→2 |
| 3 | Nur Wolken | Pmin + 6,0hPa | 4→3 | Pmin + 9,8hPa | 2→3 |
| 4 | Dunkle Wolken | Pmin + 4,0hPa | 5→4 | Pmin + 9,8hPa | 3→4 |

Tabelle fortgesetzt

| Wetter-Code (i) | Wetterlogo | Codewechsel bei P_Baro>Pup Pup(i) | Codewechsel von → auf | Codewechsel bei P_Baro<Pdwn Von > auf Pdwn(i-1) | Code-wechsel Von → auf |
|---|---|---|---|---|---|
| 5 | Dunkle Wolken mit Regen | Pmin + 2,0hPa | 6→5 | Pmin + 9,8hPa | 4→5 |
| 6 | Dunkle Wolken mit Regen, Blitz | | | Pmin + 9,8hPa | 5→6 |
| Anmerkung: Festwerte für P_QNH_min und P_QNH_max sowie berechneter Wert Pdiff werden angezeigt. | | | | | |

Gemäß der folgenden Tabelle handelt es sich bei P_Baro um den Barometerdruck, der um die Sonneneinwirkung, den Ort der Benutzung, die Temperatur und die Bewegung bereinigt ist. P_Baro wird zum Wechseln der Wetterprognose-Logos Sonne, Wolken und Regen verwendet. Der Sonneneffekt ändert die Barometeranzeige vom frühen Morgen bis zum späten Nachmittag von -2 bis -4hPa, d. h. von +20 bis +40 m Höhenänderung. Um diesen Sonneneffekt gemäß der vorliegenden Erfindung zu tilgen, wird das Änderungsprofil des barometrischen Drucks über einen Zeitraum von 24 Stunden aufgezeichnet. Bei stabilen Wetterbedingungen kehrt das Druckprofil zum Ausgangswert zurück. Dazu benützt das Gerät den Wert baro_tendenz, der in 5-Minutenzyklen gemessen wird, die über 30 Minuten gemittelt und in Einstundenzyklen gespeichert werden, und der dann als Änderung des barometrischen Drucks pro Stunde angezeigt wird. Das Höhenmessersystem 8 gemäß der vorliegenden Erfindung erzeugt stündlich gespeicherte baro_tendenz-Werte über einen Zeitraum von 24 Stunden, wobei die Änderung des Umgebungsdruckprofils mit insgesamt 24 baro_tendenz-Werten aufgezeichnet wird. Die Druckunterschiede, d. h. die Summe aller aufgezeichneten baro_tendenz-Werte, werden nach dem Verhältnis SUM_BARO_TENDENZ = Baro_Tendenz(i) für i = 1 bis 24 berechnet. Insbesondere:

$$\text{SUM\_BARO\_TENDENZ} = \text{SUM} (\text{Baro\_Tendenz}(i) + \text{Baro\_Tendenz}(i+1) + ...$$

$$\text{Baro\_Tendenz}(i+n) \text{ für } i = 1 \text{ bis } n, \text{ und } n = 24.$$

Nachdem 24 Stunden vergangen sind, werden folgende Tests zur Aktualisierung von P_Baro mit einer 24-stündigen Änderung des barometrischen Drucks ohne Sonneneffekte durchgeführt. Wenn SUM_Baro_Tendenz = 0, hat sich das Wetter nicht geändert. Wenn SUM_Baro_Tendenz nicht Null ist, hat sich das Wetter geändert und SUM_Baro_Tendenz wird zu P_Baro addiert. Nach der vorliegenden Erfindung gilt die Summe P_Baro = P_Baro + SUM_Baro_Tendenz.

Um unmittelbare Wetterprognosereaktionen zu erhalten, wird P_Baro berechnet und in 24-Stunden-Zyklen aktualisiert und in Einstundenzyklen zusätzlich mit P_Baro_Tendenz aktualisiert, wenn P_Baro_Tendenz ist größer (kleiner) als ±0,4hPa/h (±4m/h). Ein Grenzwert von 0,4hPa/h entspricht einer Änderung des barometrischen Drucks um 32m/8h, wobei es sich um den Schlimmstfall des Sonneneffekts auf Meereshöhe handelt. Um die stündliche Aktualisierung von P_Baro frei vom Sonneneffekt zu halten, werden nur Änderungen, die größer als der Grenzwert sind, zu P_Baro hinzugefügt. Davon ausgehend können wir P_Baro gemäß den folgenden Relationen in Einstundenzyklen aktualisieren.

Baro_Tendenz umfaßt gemessene und stündlich gespeicherte Barometertendenzwerte. Insbesondere:

Sun_Limit = 0,4hPa, wenn Baro_Tendenz>0,4hPa oder
Sun_Limit = 0,4hPa, wenn Baro_Tendenz<-0,4hPa, sonst
Sun_Limit = Baro_Tendenz; Baro_Änd = 0
Sun_Limit = 0, wenn Sun_Limit_Zähler = 0;

Der Sonnenlimit-Grenzwert von 3,2hPa (Sun_Limit_max) ist der schlimmstmögliche Sonneneffekt innerhalb von 24 Stunden auf Meereshöhe. Für andere Höhenbereiche muß der Wert Sun_Limit_max geändert werden. Um Sun_Limit auf 0 zu halten, wenn Sun_Limit_max in der Plus- und/oder Minusrichtung erreicht wurde (einmal pro 24 Stunden), werden alle 24 Stunden zwei Sun_Limit-Zähler gesetzt, die den positiven und negativen Werten für Sun_Limit_max entsprechen. Die Zähler werden einmal pro Stunde mit dem oben festgestellten Sonnenlimit verringert. Abhängig von dem von Baro_Tendenz gezeigten Plus- oder Minusvorzeichen, wird Zähler 1 oder Zähler 2 verringert. Wenn der Zähler 1 oder 2 von Sun_Limit_max Null erreicht hat, wird er auf Null gehalten, und das Sun_Limit wird auf Null gesetzt (Grenzwert erreicht), wenn der Zähler 1 ist 0 und das Vorzeichen von Baro_Tendenz noch Plus ist, oder wenn der Zähler 2 ist 0 und das Vorzeichen von Baro_Tendenz ist noch Minus oder beide Zähler 0 erreicht haben (Grenzwerte in beiden Richtungen erreicht). In jedem dieser drei Fälle werden das Sun_Limit und die Zähler 1 und 2 von Sun_Limit_max auf Null gehalten, bis ein vollständiger 24-Stundenzyklus abgeschlossen ist. Der Grenzwert für Sun_Limit wird berechnet, und die Sonneneffektkorrektur wird vorgenommen, wenn dessen 24-Stundenmaximum erreicht wurde. Zur Anpassung werden anwendbare Werte im EEPROM zur Benutzung gespeichert.

**TABELLE B Bestimmung der Sun_Limit_max-Werte unter Verwendung der tatsächlichen Höhe Gemäß einem Ausführungsbeispiel der vorliegenden Erfindung**

| EIN | Höhe (m) | -400-150 | 151 - 700 | 700-1500 | 1501-3000 | >3000 |
|---|---|---|---|---|---|---|
| | Baro (hPa) | | | | | |
| AUS | Sun_Limit_max (hPa) | 3,2 | 2,7 | 2,2 | 1,7 | 1,2 |

Wenn P_Baro aktualisiert wird, wird auch der korrekte Sum_Baro_Tendenz aktualisiert. Des weiteren wird folgende Variable stündlich aktualisiert:

SUM_Baro_Änd = SUM(Baro_Änd(i) +
Baro_Änd(I+1) + Baro_Änd(i + n)) für i = 1 bis n und n = 24;
und wenn Baro_Tendenz <> 0, dann Sum_Baro_Tendenz =
Sum_Baro_Tendenz - Sum_Baro_Änd, alle 24 Stunden.

Abhängig von der geometrischen Höhe, in der das Gerät verwendet wird, werden P_QNH_min (Pmin) und P_QNH_max (Pmax) angepaßt, um geringere Änderungen des barometrischen Drucks, die von Wetteränderungen in größeren Höhen verursacht wurden, zu behandeln. Der letzte gültige Barometertendenzwert wird dazu verwendet, Höhenanzeigen im Vergleich zu Änderungen des barometrischen Drucks zu korrigieren. Insbesondere ist Pdiff=P_QNH_max - P_QNH_min; und Pdiff wird gespeichert, um als Funktion des tatsächlichen barometrischen Drucks BARO angezeigt zu werden. Des weiteren wird P_QNH_min dazu verwendet, den Code für das Display des Wetterprognoselogos zu bestimmen. Deshalb wird P_QNH_min mit dem von Benutzer eingegebenen Wetterlogo berechnet, und Pdiff wird berechnet durch Einstellung von P_QNH_min = Baro - Pdiff + i*Pdiff/6, wobei i = Wettercode, der vom Benutzer beim Start eingegeben und in der Folge von den Indizes des Geräts prognostiziert wurde.

**TABELLE C Bestimmung von Pdiff mit der tatsächlichen Höhe gemäß einem Ausführungsbeispiel der vorliegenden Erfindung**

| | Höhe (m) | -400-150 | 151-700 | 700-1500 | 1501-3000 | >3000 |
|---|---|---|---|---|---|---|
| Höhe-diff über 6 Stunden | (m) | 160 | 140 | 100 | 70 | 50 |
| Pdiff | (hPa) | 16 | 14 | 10 | 7 | 5 |
| Pdiff/6 < AUS | (hPa) | 2,67 | 2,33 | 1,67 | 1,17 | 0,83 |

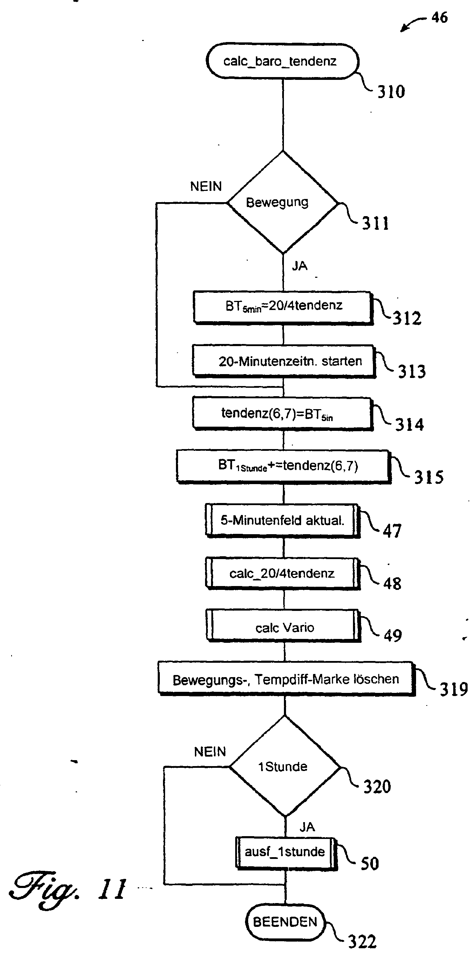

Figur 11 ist ein Flußdiagramm eines Verfahrens zur Berechnung einer barometrischen Tendenz 46 gemäß einem Ausführungsbeispiel der vorliegenden Erfindung. Insbesondere wird die barometrische Tendenz 46 bestimmt durch Auslösung einer Berechnung der barometrischen Tendenz 310. Dies umfaßt ein Prüfen der Bewegungsmarke 311, und wenn die Marke gesetzt ist, Einstellung der 5-Minuten-Barometertendenzvariablen auf einen zwanzigminütigen, gemittelten barometrischen Tendenzwert 312 und dann Starten eines 20-Minutenzeitnehmers 313. Ist keine Bewegungsmarke gesetzt, wird die 5-Minuten-Barometertendenzvariable aufgezeichnet 314, und die Einstunden-Barometertendenzvariable wird dem Tendenzwert 315 gleichgesetzt. Dann wird ein 5-Minutenfeld aktualisiert 47 und eine gemittelte Zwanzigminuten-Barometertendenz wird berechnet 48. Danach wird eine Variovariable angepaßt 49, und die Bewegungs- und Temperaturdifferenzmarke werden gelöscht 319. Dann wird eine Prüfung durchgeführt, ob eine Stunde vergangen ist, und wenn dies der Fall ist, wird eine Einstunden-Ausführungsoperation ausgelöst 50. Wenn nicht, wird die Routine abgebrochen 322.

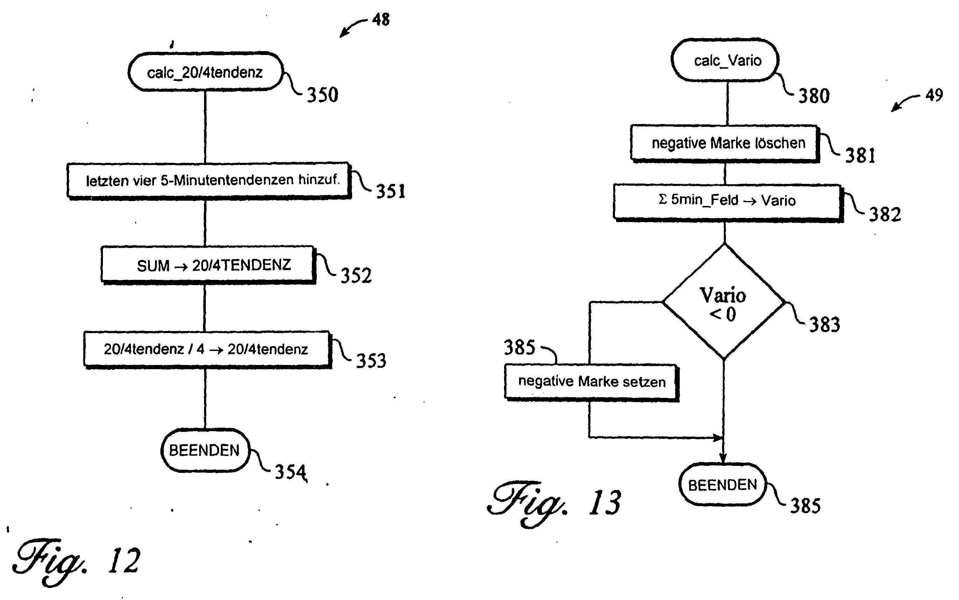

Figur 12 ist ein Flußdiagramm eines Verfahrens zur Berechnung einer 20 Minuten dividiert durch 4 Tendenz 48 gemäß einem Ausführungsbeispiel der vorliegenden Erfindung. Eine 20 Minuten dividiert durch 4 Tendenz wird bestimmt 48 durch Auslösung der Berechnung 350; Hinzufügen 351 der letzten vier 5-Minuten-Trends; Zuweisung der Summe zu einer 20/4-Tendenzvariablen 352; Division 353 der 20/4-Trendvariablen durch vier; und Abbrechen 354 der Routine. Dies ist nützlich, weil von Wetteränderungen verursachte Druckänderungen in der Größenordnung von 1hPa/h oder etwa 17 cm/Min liegen. Solche Änderungen können innerhalb von 3 Minuten mit einer inneren Auflösung von 50 cm/bit entdeckt werden. Zur Berücksichtigung von zwei Messungen zur Bestätigung der tatsächlichen Tendenzen der barometrischen Wetteränderung wird der atmosphärische Druck mindestens alle 5 Minuten bei Stillstand und keiner Veränderung der geometrischen Höhe abgenommen. Um geringe Änderungen des barometrischen Drucks zu erfassen, wird die 5-Minuten-Abnahme des barometrischen Drucks mit 4 Proben über einen Zeitraum von 20 Minuten gemäß einem Ausführungsbeispiel der vorliegenden Erfindung durchgeführt und als "BAROTENDENZ20/4" gemittelt. Bei einer Auflösung von 0,05hPa = 50 cm Luftsäule kann eine Baro-Tendenz-Meßauflösung von 50 cm / 20 Minuten = $\pm$ 2,5cm/Min bis $\pm$5cm/Min = $\pm$ (0,0025 bis 0,005)hPa/Min bei größeren Höhen erreicht werden. Der auf diese Weise nach einem Ausführungsbeispiel der vorliegenden Erfindung berechnete Gradient wird nicht nur zur Wetterprognose verwendet, sondern auch zur Kompensation des Höhenmessersystems 8 während einer Bewegung.

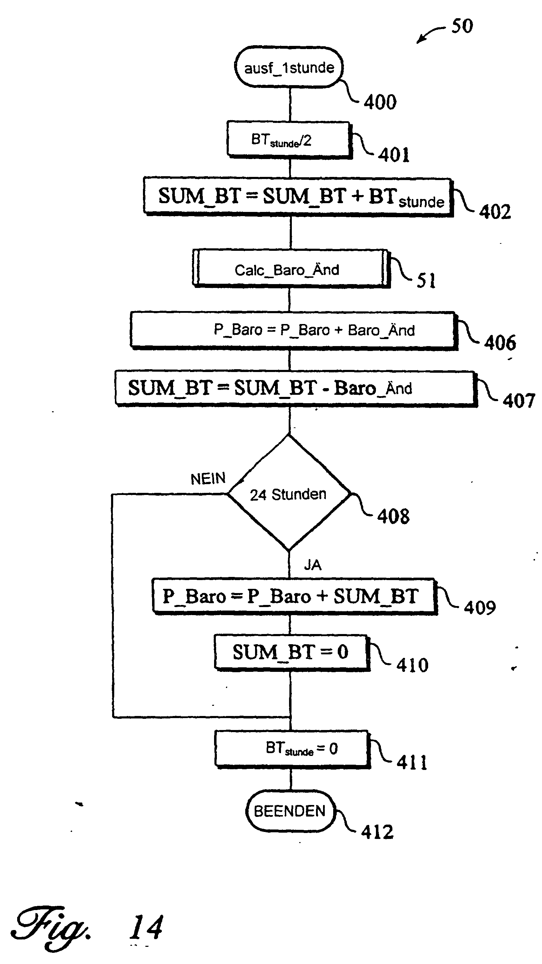

Figur 13 ist ein Flußdiagramm eines Verfahrens zur Berechnung der tatsächlichen barometrischen Tendenz pro Stunde zu Anzeigezwecken gemäß einem Ausführungsbeispiel der vorliegenden Erfindung. Insbesondere wird die BARO_TENDENZ/h, bezeichnet als calc_vario 41 bestimmt durch Starten 380 einer Routine, die eine negative Marke löscht 381, und durch Anwendung einer Summe eines 5-Minuten-Feldes auf den Wert einer barometrischen Vario-Variablen 382. Wenn die barometrische Vario-Variable negativ ist, wird die Routine unterbrochen 385. Ist dies nicht der Fall, wird eine negative Marke gesetzt 385 und gemäß der vorliegenden Erfindung abgebrochen 385.

Die Variometeranzeige, die nicht die als Vario bezeichnete barometrische Tendenz/h ist, wird von Piloten, Fallschirmspringern und Deltagleitern (Drachenfliegern) verwendet; das Gerät stellt sehr geringe Höhenänderungen sehr rasch fest, um den Piloten von Aufwindkanälen zum Steigen oder von zu vermeidenden Abwinden zu informieren. Die kürzestmögliche Reaktionszeit und die höchstmögliche Auflösung werden gemäß der vorliegenden Erfindung bereitgestellt. Die interne Höheneinheit (IHG) ändert sich in 0,5-Sekundenzyklen, um die Messung auszuführen. Mit der internen Auflösung von 1 bit = 0,5 m werden die gemessenen Werte über eine Sekunde gemittelt, und eine Änderung der vertikalen Geschwindigkeit von 0,25m/s wird erfaßt und als Vario-Auflösung angezeigt. Um die Aufstiegs- und Abstiegsraten von Wanderern, Kletterern, Läufern und Skifahrern festzustellen, nimmt das Gerät nach der vorliegenden Erfindung die Höhenänderung ab und erstellt einen Durchschnittswert über einen längeren Zeitraum, um die vertikale Geschwindigkeit in km/h anzuzeigen. Beispielsweise wird ein sehr langsamer Anstieg von 1 m in 10 Sekunden (0,36 km/h) ebenso erfaßt wie ein sehr rascher Anstieg von 1200 m in 28 Minuten = 0,7 m/s = 2,5 km/h, wie etwa beim raschen Hinauflaufen auf einen steilen Berg. Für Flugsportarten wie Fallschirmspringen und Skydiving beispielsweise wird die vertikale Geschwindigkeit in km/h oder Meilen pro Stunde angezeigt, bei einer Auflösung von 0,1 km/h = 0,028 m/s in Entsprechung zu einer Probenfrequenz von bis zu einer Minute oder mindestens 36 Sekunden. Der maximale vertikale Geschwindigkeitswert, der angezeigt wird, liegt bei etwa 60m/s oder 220 km/h, d. h. der Spitzengeschwindigkeit, die von einem Fallschirmspringer in freiem Fall erreicht werden kann.

Figur 14 ist ein Flußdiagramm eines Verfahrens zur Ausführung einer Einstundenberechnung 50 gemäß einem Ausführungsbeispiel der vorliegenden Erfindung. Insbesondere umfaßt eine Einstundenberechnung 50 das Starten einer Einstundenroutine 400; Dividieren der stündlichen barometrischen Tendenz auf die Hälfte 401 und Summieren einer vorherigen Summierung der barometrischen Tendenz mit der stündlichen barometrischen Tendenz 402. Dann wird die barometrische Änderung berechnet 51. Dann wird eine Variable P_BARO des barometrischen Drucks um den Betrag der barometrischen Änderung erhöht 406. Die Summe der barometrischen Tendenz wird durch die barometrische Änderung verringert 407. Danach wird eine Prüfung ausgeführt, ob 24 Stunden vergangen sind 408. Wenn ja, wird der barometrische Druck P_BARO um die Summe der barometrischen Tendenz inkrementiert 409, und die Summe der barometrischen Tendenz wird genullt. Wenn nicht 24 Stunden vergangen sind, werden keine solche Anpassungen am barometrischen Druck P_BARO durchgeführt, und die Summe der barometrischen Tendenzen wird nicht genullt, aber die stündliche barometrische Tendenz wird genullt 411. Dann wird die Routine verlassen 412.

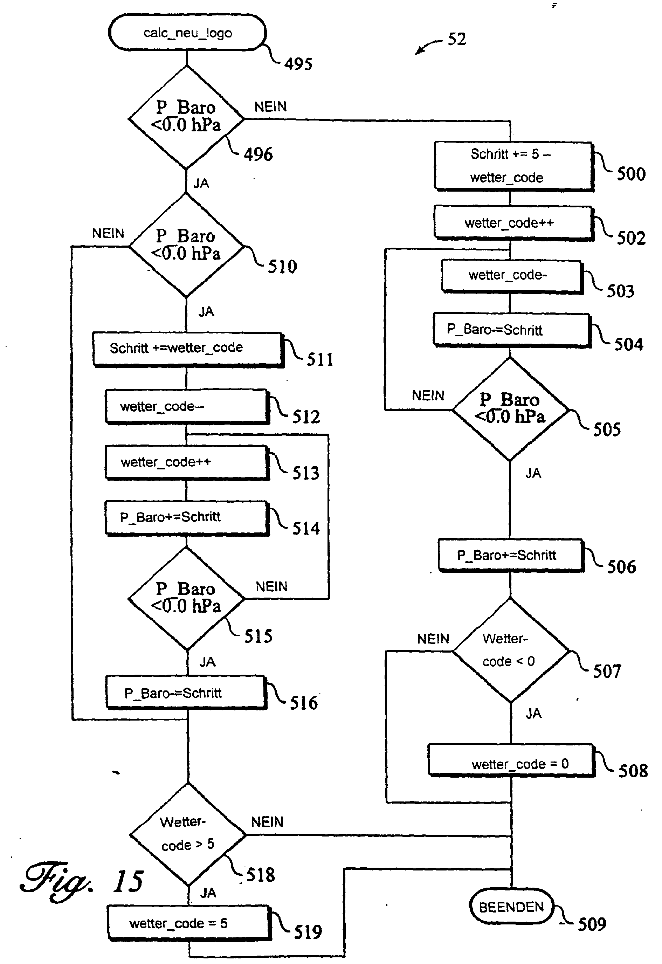

Figur 15 ist ein Flußdiagramm zur Bestimmung eines neuen Logos 52 gemäß einem Ausführungsbeispiel der vorliegenden Erfindung. Insbesondere wird ein neues Logo festgelegt 52 durch eine neue Logo-Berechnung 495, einschließlich der Prüfung 496, ob der barometrische Druck P_BARO sich auf weniger als 0,0hPa verändert hat. Dann wird eine Schrittvariable +5 um den Wettercode verringert 500, und eine Wettercodebestimmung wird durchgeführt 502. Danach wird eine darauf bezogene Wettercodeverringerungsoperation 503 ausgeführt, gefolgt von der Gleichsetzung der Variablen des barometrischen Drucks mit einem Schrittwert 504. Sodann wird eine weitere Suche nach einer Bedingung mit einem barometrischen Druck P_BARO unter Null durchgeführt 505. Eine negative Bestimmung wird gefolgt von einer Wiederholung der Verringerung 503 und einer Schrittveränderung des barometrischen Drucks 504. Wenn der barometrische Druck P_BARO negativ geworden ist 505, wird er erneut um einen Schritt verändert 506, gefolgt von einer Prüfung, ob der Wettercode negativ ist. Ist dies der Fall, wird der Wettercode auf Null gesetzt. Wenn nicht, folgt die Abbruchoperation 509. Wenn der barometrische Druck anfänglich negativ ist, wird eine Prüfung 510 durchgeführt, und wenn der barometrische Druck P_BARO nun negativ ist, wird zum Wettercode 511 eine Schrittvariable hinzugefügt und der Wettercode wird zuerst verringert 512 und dann erhöht 513, gefolgt von einer Schrittveränderung 514 des barometrischen Drucks 514. Ist der barometrische Druck noch immer nicht negativ, wird der Wettercode erneut erhöht 513 und der barometrische Druck 514 erneut erhöht. Ist der barometrische Druck dann negativ, wird der barometrische Druck um die Schrittvariable verringert 516. Wenn die Prüfung des barometrischen Drucks P_BARO 510 negativ ist, werden die Verringerung und Erhöhung des Wettercodes und die Aufwärts- sowie Abwärtsschrittänderungen des barometrischen Drucks übersprungen. Ist der Wettercode größer als 5, wird er auf 5 gestellt. Wenn nicht, wird abgebrochen 509.

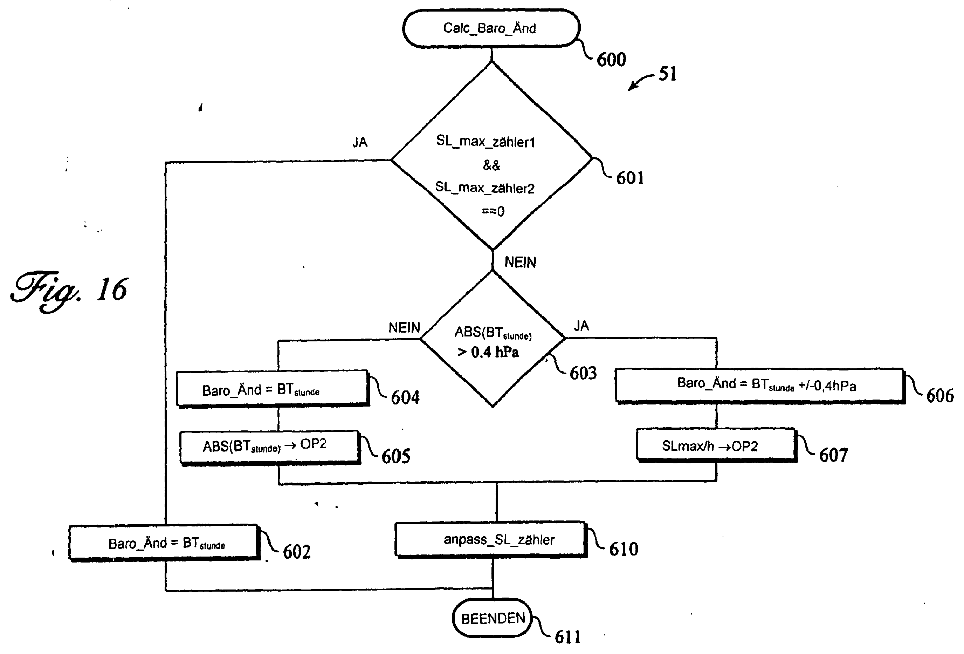

Figur 16 ist ein Flußdiagramm zur Bestimmung der barometrischen Änderung 51 gemäß einem Ausführungsbeispiel der vorliegenden Erfindung. Insbesondere wird die barometrische Änderung bestimmt 600 durch Evaluierung 601, ob der erste und der zweite sun_limit_max_Zähler beide gleich Null sind. Wenn ja, wird die barometrische Tendenz gleichgesetzt mit dem stündlichen barometrischen Trend 602. Wenn nicht, wird eine Feststellung gemacht 603, ob der absolute Wert der stündlichen barometrischen Tendenz größer als 0,4hPa ist. Wenn ja, wird die barometrische Tendenz gleichgesetzt mit der stündlichen barometrischen Tendenz plus oder minus 0,4hPa. Zusätzlich wird SLmax/h in OP2 eingegeben 607. Wenn nicht, wird die barometrische Tendenz gleichgesetzt mit der stündlichen barometrischen Tendenz 604, und der absolute Wert der stündlichen barometrischen Tendenz wird gleich OP2 gesetzt 605. Danach wird der Sun_limit-Zähler angepaßt 610, und es wird abgebrochen 611.

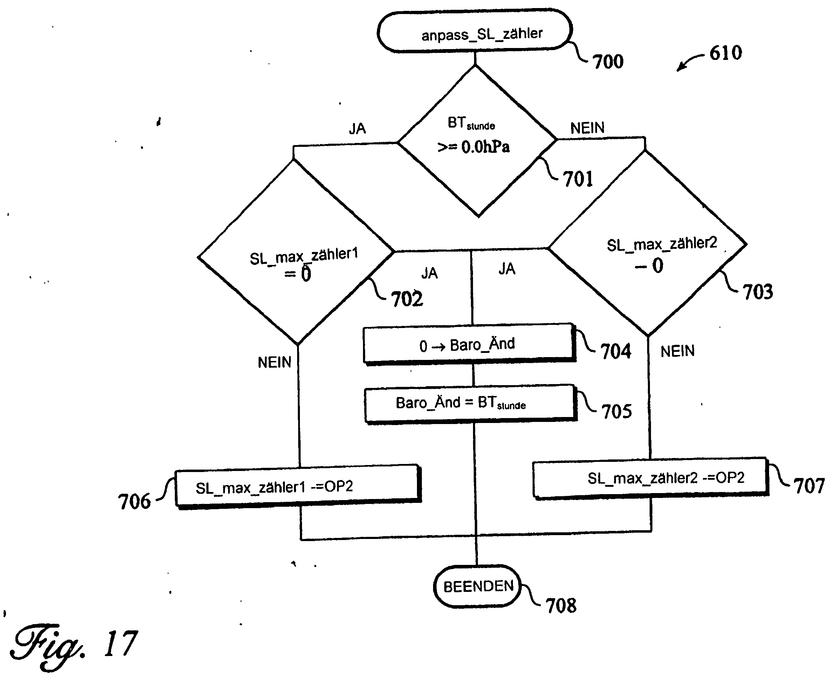

Figur 17 ist ein Flußdiagramm für die Anpassung des sun_limit-Zählers gemäß einem Ausführungsbeispiel der vorliegenden Erfindung 610. Insbesondere werden die sun_limit-Zähler angepaßt 701 durch Prüfung, ob der stündliche barometrische Trend größer oder gleich Null ist. Ist dies der Fall, wird ein erster sun_limit-Zähler auf einen Nullzustand geprüft. Wenn nicht Null, wird der Inhalt des ersten Sun_limit-Zählers in OP2 eingegeben 706 und abgebrochen 708. Wenn nicht, wird ein zweiter sun_limit-Zähler auf einen Nullzustand geprüft. Wenn nicht Null, wird der Inhalt des zweiten sun_limit-Zählers in OP2 eingegeben 707. Sind beide Zähler auf Null, wird Null als barometrische Änderung eingegeben 704, und dies wird 705 der stündliche barometrische Trend.

TABELLE D **Anzeige der Wetterprognoselogos**

| LOGO | CODE | WETTERPROGNOSE |
|---|---|---|
| Nur Sonne | 1 | Schön und sonnig |
| Sonnen mit Wolken | 2 | Teilweise bewölkt |
| Nur Wolken | 3 | Stark bewölkt |
| Dunkle Wolken | 4 | Regen möglich |
| Dunkle Wolken mit Regen | 5 | Regenschauer |
| Dunkle Wolken mit Regen, Blitz | 6 | Gewitter, Sturm |

Der Wechsel des Wetterlogos wird verlangsamt, wenn ein Wettertrend ermittelt wird und die Logos bei Änderung in eine Richtung bewegt. Die Indices (i) vergrößern Pdiff/6 von einem Wetterlogowechsel zum nächsten. Wenn i>i-1, ändert sich das Wetter in Richtung Regen und Schauern; wenn i<i-1, ändert sich das Wetter in Richtung schön und sonnig. Im ersten Fall gilt Pdiff/6 = Pdiff/6 + i*0,1; im zweiten Fall gilt Pdiff/6 = Pdiff/6 + (i_max-i)*0,1. Insbesondere gilt:

TABELLE E **Generierung der Wetterlogoschaltung**

| Logo | i | dP Abwärts | dP Aufwärts |
|---|---|---|---|
| Nur Sonne | 0 | Pdiff/6+0,0 | |
| Sonnen mit Wolken | 1 | Pdiff/6+0,1 | Pdiff/6+0,4 |
| Nur Wolken | 2 | Pdiff/6+0,2 | Pdiff/6+0,3 |
| Dunkle Wolken | 3 | Pdiff/6+0,3 | Pdiff/6+0,2 |
| Dunkle Wolken mit Regen | 4 | Pdiff/6+0,4 | Pdiff/6+0,1 |
| Dunkle Wolken mit Regen, Blitz | 5 | | Pdiff/6+0,0 |

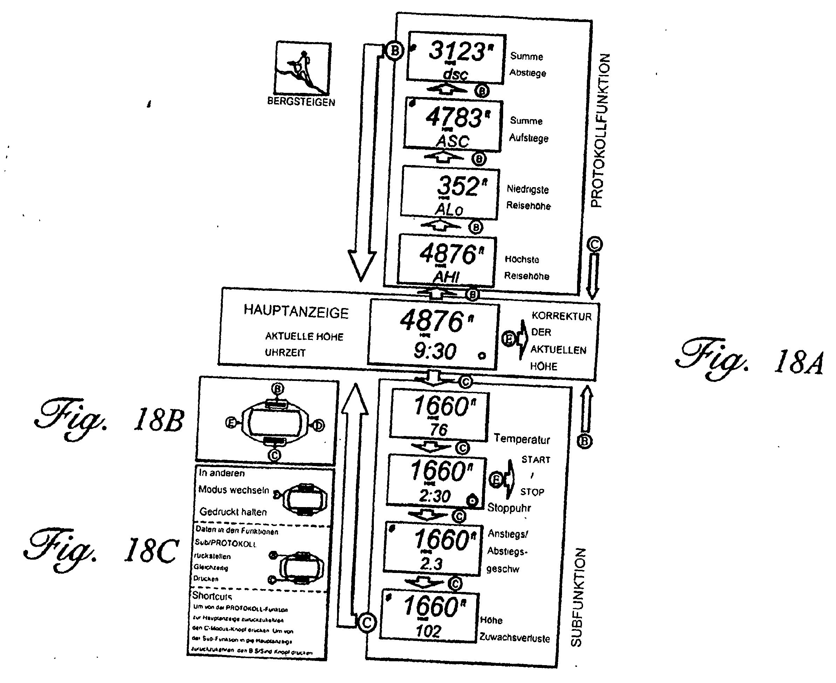

Figur 18A ist ein Diagramm von Anzeigen und Funktionen eines Höhenmesserdisplays gemäß einem Ausführungsbeispiel der vorliegenden Erfindung. Figur 18B ist ein Diagramm einer möglichen Sichtfläche eines Höhenmesser-Uhrendisplays gemäß einem Ausführungsbeispiel der vorliegenden Erfindung, einschließlich der Darstellung von vier Druckknöpfen, die zur Einstellung eines gewählten Betriebsmodus der Uhr und des Höhenmessers betätigt werden können. Figur 18C ist ein Diagramm zweiter und dritter Informationskategorien für die Höhenmesseranzeige gemäß einem Ausführungsbeispiel der vorliegenden Erfindung. Skiläufe werden gemäß der vorliegenden Erfindung in einem Skimodus gezählt und angezeigt. Das Gerät zählt bis zu fünfzehn Läufe und macht einen Übertrag bei 16. Die Gesamtläufe werden kontinuierlich aufgezeichnet, mit Übertrag bei Lauf 255. Ein Lauf findet statt, wenn sich ein Ski 15 m pro Minute oder schneller nach unten bewegt. Damit wird eine Laufmarke gesetzt und der Laufzähler mit jedem Lauf um 1 erhöht. Ein vertikaler Abstieg von 15 m/Min entspricht einer Distanz von 85 m mit 1,4 m/s oder 5,0 km/h bergab. Wenn die Laufmarke gesetzt ist und ein Ski 15 m in 1 Minute oder schneller hochsteigt, wird die Laufmarke gelöscht und das Programm für die nächste Lauferfassung und Laufzählerinkrementierung eingestellt. Die Variable "abwärts" wird so kontinuierlich, beispielsweise in Einsekundenzyklen, nach der folgenden Formel berechnet:

$$\text{Abwärts} = \text{abwärts} + \text{alti\_alt} - \text{alti\_neu}$$

wobei: alti_alt = Höhe vor 1 Sekunde
alti_neu = aktuelle Höhe
Initialisierung jede 1 Min. zyklus > abwärts = 0
Initialisierung beim Einschalten > abwärts = 0;
lauf_marke = falsch

Insbesondere:

1. wenn (lauf_marke = falsch) UND (abwärts > 15 m) dann Akt_Lauf = Akt_LAUF+1; Tot_Lauf = Tot_Lauf+1; lauf_marke = wahr; und
2. wenn (abwärts < -15m) dann lauf_marke = falsch; GEHEZU 1.

Das Messen der Höhe in 1-Sekundenzyklen erfordert etwa 150 - 180 μA für das Höhenmessersystem 8. Der Stromverbrauch kann erheblich reduziert werden, beispielsweise auf 10 - 20 μA, durch automatisches Wechseln zwischen LAUF und STANDBY gemäß der vorliegenden Erfindung. In den Displayzuständen LAUF oder STANDBY wird das Display 15 gemäß der vorliegenden Erfindung in 0,5-Sekundenzyklen beleuchtet und aktualisiert. LAUF wird gemäß der vorliegenden Erfindung aktiviert durch Drücken eines Knopfes oder wenn im STANDBY-Modus eine Bewegung erfaßt wurde (d. h. die Höhe hat sich um mehr als ±2 m verändert); es schaltet sich selbst aus und wechselt zurück zu STANDBY, wenn sich die Höhe um weniger als ±2m innerhalb von 2 Minuten seit der Aktivierung geändert hat. STANDBY wird durch Selbst-Deaktivierung von LAUF aktiviert und deaktiviert, d. h. auf LAUF geschaltet durch Drücken eines Knopfes oder wenn sich die Höhe seit der Aktivierung um mehr als ±2 m geändert hat. Im STANDBY-Modus mißt das Gerät die Höhe oder den Barometerdruck alle 2 Minuten. Wenn dies stattfindet, wird der Druck fünfmal gemessen, wobei die beiden ersten Werte vernachlässigt und die letzten drei gemittelt werden. Danach wird die Temperatur für die Temperaturkompensation mit dem gemittelten Höhen/Druckwert gemessen, wenn erforderlich (d. h. Temperaturdifferenz von > 0,125°C). Die folgenden Variablen werden zur Bestimmung der Displaypräsentation gemäß der vorliegenden Erfindung verwendet.

**TABELLE F** <u>Liste der Variablen</u>

| <u>Name</u> | <u>Halbbytes</u> | <u>Beschreibung</u> |
|---|---|---|
| save_data | 2 | Speichervariable |
| K_data | 4 | Kompensationsdaten für die Höhe |
| alti-iau | 4 | Höhe in IAU-Einheiten |
| delta_iau | 2 | Speichert alti_iau(t) - alti_iau(t-1) |
| Alti-tendenz | 2 | Tendenzspeichervariable während 5-Minutenzyklus |
| alti_20/4tendenz | 2 | Gemittelte Höhentendenz |
| tendenz | 2 | Speichervariable |
| temp_Zähler | 1 | Verzögerungszähler, wenn Temperat.diff. > 0,125°C |
| 5min_Feld | 12 | (5*2halbbytes) Feld von BT5min-Daten |
| BT5min | 2 | Barotendenz über 5 Minuten |
| Delta_ipu | 2 | Speichert baro_inpu(t) - baro_ipu(t-1) |
| 20/4trend | 2 | Gemittelte Barotendenz über 20 Minuten |

Tabelle fortgesetzt

| Name | Halbbytes | Beschreibung |
|---|---|---|
| BT1 hour | 2 | Stündliche barometrische Tendenz, intern verwendet |
| vario | 3 | Stündliche barometrische Tendenz für Anzeigezwecke |
| P_Baro | 4 | Barometrischer Druck zum Wechseln d. Wetterlogos |
| Wetter_code | 1 | Code für das Wetterlogo |
| SUM_BT | 4 | Summe der Barotendenzen |
| Marken | 2 | Unterschiedliche Marken |
| Baro ipu | 4 | Barometrischer Druck in IPU-Einheiten |
| Gesamt | 57 | Halbbytes der benötigten Variablen |

Unter Halbbytes sind Informationsmengen zu je vier Bits zu verstehen, die wie oben beschrieben verwendet werden, außerdem für Höhen- und Temperaturmessungen, Berechnungen von La-Grange-Kompensation und Höhe, wie in US-Patent Nr. 5,764,541 dargestellt, und zur Temperaturkompensation sowie für Speicher- und Displayfunktionen und für die Funktionen von Uhr und Benutzerschnittstelle. Beispielsweise verwendet der Höhenmesser gemäß der vorliegenden Erfindung etwa 60 Halbbytes für seinen Betrieb. Die Informationswerte Baro/Höhe MAX/MIN werden im $E^2$PROM gespeichert und in Variable mit der Bezeichnung min_data und max_data übertragen, wenn in einen neuen Modus gemäß der vorliegenden Erfindung gewechselt wird.

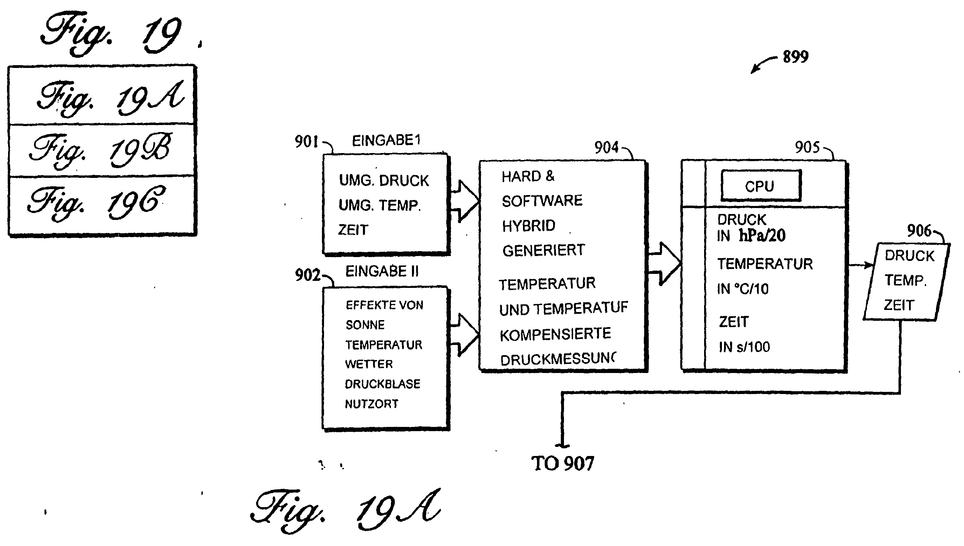

Figur 19A - 19C sind vereinfachte Flußdiagramme des Verfahrens gemäß einem Ausführungsbeispiel der vorliegenden Erfindung. Figur 19A ist ein Flußdiagramm, welches den Empfang einer ersten und einer zweiten Eingabegruppe enthält, um die Generierung von Temperaturwerten und einer temperaturkompensierten Druckmessung gemäß der vorliegenden Erfindung zu ermöglichen. Insbesondere werden Umgebungsdruck, Umgebungstemperatur und Zeitwerte bereitgestellt 901, und die Wirkungen von Sonne, Temperatur, Wetter, Druckblase und Nutzungsort werden in ein Hardware und Softwarehybrid eingegeben 902, um eine Temperaturmessung und eine temperaturkompensierte Druckmessung gemäß der vorliegenden Erfindung zu generieren 904. Als nächstes generiert die zentrale Prozessoreinheit 905 geeichte Druck-, Temperatur- und Zeitwerte gemäß vorbestimmten Einheiten. Der Druck wird beispielsweise ausgedrückt in Einheiten zu hPa/20; die Temperatur in Einheiten zu °C/10; und die Zeit in Einheiten zu s/100, um die Werte für den Ausgabedruck, Temperatur und Zeit zu produzieren 906, um die Berechnung barometrisch kompensierter Höhen- und Wetteranzeigen wie unten beschrieben zu ermöglichen.

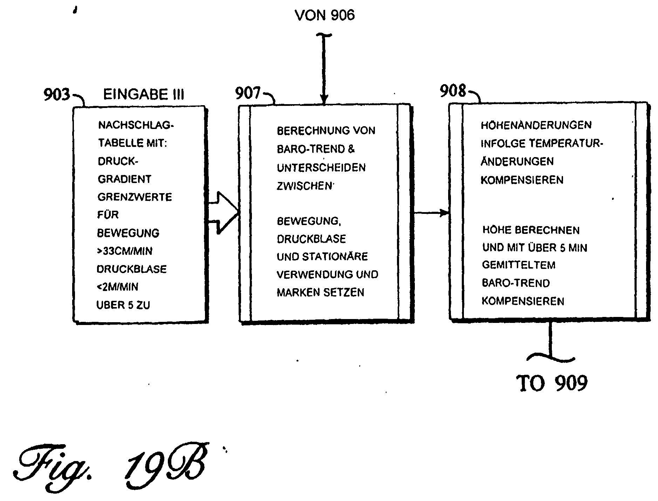

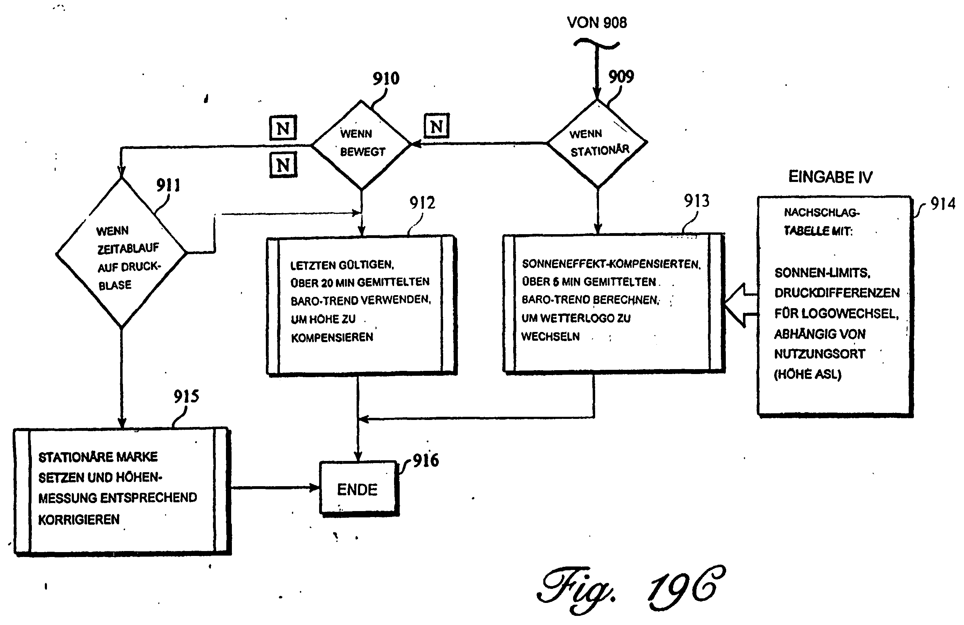

Figur 19B ist ein Flußdiagramm, das die Eingabe 903 von Druckgradientgrenzwerten von einer Nachschlagtabelle für Bewegungen über 33 cm/Minute und Druckblasen von weniger als 2 Meter / Minute über eine vorher festgelegte Zeit von 5 - 20 Minuten enthält. Als nächstes werden die vorbestimmten Baro-Tendenz-Quantitäten berechnet 907, welche Bewegungs- und Druckblasenbedingungen erkennen und Marken setzen, um das Weiterbestehen dieser Bedingungen anzuzeigen. Dann wird eine Kompensation für Höhenänderungen infolge Temperaturänderungen implementiert 908, und die Höhe wird mit Kompensation für Baro-Tendenz gemittelt über einen vorbestimmten Zeitraum, z. B. 5 Minuten, berechnet.

Figur 19C ist ein Flußdiagramm gemäß der vorliegenden Erfindung zur Bestimmung 909 des Bestehens stationärer Bedingungen. Wenn die stationäre Marke gesetzt wird, wird eine Sonneneffektkompensierte Baro-Tendenz als Durchschnitt über 5 Minuten berechnet, und gegebenenfalls wird ein Wetterlogowechsel ausgeführt 913 und der Prozeß wird abgeschlossen 916. Die Sonneneffektkompensierte Baro-Tendenz wird berechnet 913 mit Input 914 von einer Nachschlagtabelle von Sonnengrenzwerten, beispielsweise Druckdifferenzen, welche die Logoeinstellung definieren, welche Einstellungen abhängig vom Nutzungsort sind, d. h. von der Seehöhe (ASL). Unter stationären Bedingungen wird festgestellt 910, ob eine Bewegungsmarke gesetzt wurde. Wurde die Bewegungsmarke gesetzt, wird die letzte gültige Baro-Tendenz, die über 20 Minuten gemittelt wurde, verwendet 912, um einen bewegungskompensierten Höhenwert zu erzielen. Wurde keine Bewegungsmarke gesetzt, wird festgestellt 911, ob eine Zeitablaufbedingung für Druckblasen besteht, und wenn dies der Fall ist, wird die stationäre Marke gesetzt 915 und der Höhenmesser korrigiert. Wenn nicht, wird die letzte gültige Baro-Tendenz, die über 20 Minuten gemittelt wurde, verwendet 912, um einen bewegungskompensierten Höhenwert zu erzielen.

Zwar wurden unterschiedliche Ausführungsbeispiele der vorliegenden Erfindung beschrieben, doch ist dazu anzumerken, daß diese nur als Beispiele und ohne jegliche Beschränkungen dargestellt wurden. Der Geltungsbereich und die Reichweite der vorliegenden Erfindung können deshalb von keiner der oben beschriebenen beispielhaften Ausführungsbeispiele beschränkt werden; diese sollten vielmehr ausschließlich in Entsprechung zu den folgenden Ansprüchen und deren Äquivalenten definiert werden.

**Patentansprüche**

1. Verfahren zur Bestimmung von Wetterprognosenanzeigen, welches ein Messen der Temperatur, ein Messen des Umgebungsluftdrucks und eine Auswertung des gemessenen Umgebungsluftdrucks umfasst, wobei wiederholt Gradientenwerte, die jeweils der zeitlichen Änderung des Umgebungsluftdrucks entsprechen, erfasst werden und zur Unterscheidung zwischen Druckänderungen, die durch Höhenänderungen verursacht werden, und Druckänderungen, die von Wetteränderungen verursacht werden, die erfassten Gradientenwerte jeweils mit einem Grenzwert verglichen werden, **dadurch gekennzeichnet, dass** zur Bestimmung von Wetterprognoseanzeigen, die vertikal bewegungskompensiert sind, eine Berechnung der barometrischen Tendenz Stattfindet, welche das Ausfiltern bewegungsinduzierter Fehler umfasst.

2. Verfahren nach Anspruch 1, **dadurch gekennzeichnet, dass** falls ein erfasster Gradientenwert unterhalb des Grenzwerts liegt, dieser Gradientenwert in einer Tendenzvariablen gespeichert wird und, falls ein später erfasster Gradientenwert oberhalb des Grenzwerts liegt, dieser oberhalb des Grenzwerts liegende Gradientenwert für die Bestimmung der Wetterprognoseanzeige nicht berücksichtigt wird und für die Bestimmung der Wetterprognoseanzeige die gespeicherte Tendenzvariable herangezogen wird.

3. Verfahren nach Anspruch 1 oder Anspruch 2, **dadurch gekennzeichnet, dass** der erfasste Gradientenwert der zeitlichen Änderung des Umgebungsluftdrucks über die jeweiligen letzten fünf Minuten entspricht.

4. Verfahren nach Anspruch 2 oder Anspruch 3, **dadurch gekennzeichnet, dass** mehrere in aufeinanderfolgenden Zeiträumen erfasste Gradientenwerte, die unterhalb des Grenzwerts liegen, in Tendenzvariablen gespeichert werden und, falls ein später erfasster Gradientenwert oberhalb des Grenzwerts liegt, ein Mittelwert der gespeicherten Tendenzvariablen gebildet wird, der für die Bestimmung der Wetterprognoseanzeige herangezogen wird.

5. Verfahren nach einem der Ansprüche 2 bis 4, **dadurch gekennzeichnet, dass** zur Bestimmung der Wetterprognoseanzeige über eine wiederholte Erfassung von Gradientenwerten, die jeweils der zeitlichen Änderung des Umgebungsdrucks entsprechen, eine Wettertendenzvariable ermittelt wird, wobei bei Erfassungen von Gradientenwerten, die unterhalb des Grenzwerts liegen, diese Gradientenwerte zur Wettertendenzvariablen jeweils addiert werden und bei Erfassungen von Gradientenwerten, die oberhalb des Grenzwerts liegen, aus den gespeicherten Tendenzvariablen erhaltene Werte zur Wettertendenzvariablen addiert werden.

6. Verfahren nach Anspruch 5, **dadurch gekennzeichnet, dass** die Wettertendenzvariable jeweils für eine Stunde ermittelt wird.

7. Verfahren nach Anspruch 5 oder Anspruch 6, **dadurch gekennzeichnet, dass** die Bestimmung der Wetterprognoseanzeige gegenüber durch Sonneneffekte bewirkten Druckänderungen kompensiert wird, wobei eine Summe der Wettertendenzvariablen über 24 Stunden gebildet wird.

8. Verfahren nach Anspruch 7, **dadurch gekennzeichnet, dass** eine Wetterprognoseanzeige jeweils nach einer Stunde bestimmt wird, wobei zur Kompensation der über eine Stunde ermittelten barometrischen Tendenzvariablen gegenüber Sonneneffekten nur die über einen dem Sonneneffekt zugewiesenen Änderungswert hinausgehende Änderung des Umgebungsluftdrucks für die Bestimmung der Wetterprognoseanzeige berücksichtigt wird.

9. Verfahren zur Bestimmung von Höhenanzeigen, welches ein Messen der Temperatur, ein Messen des Umgebungsluftdrucks und eine Auswertung des gemessenenen Umgebungsluftdrucks umfasst, wobei wiederholt Gradientenwerte, die jeweils der zeitlichen Änderung des Umgebungsluftdrucks entsprechen, erfasst werden und zur Unterscheidung zwischen Druckänderungen, die durch Höhenänderungen verursacht werden, und Druckänderungen, die von Wetteränderungen verursacht werden, die erfassten Gradientenwerte jeweils mit einem Grenzwert verglichen werden, **dadurch gekennzeichnet, dass** zur Bestimmung von Höhenanzeigen, die barometrisch kompensiert sind in Bezug auf Änderungen des atmosphärischen Drucks, die von Wetteränderungen verursacht sind, ein Korrekturwert für die aus dem gemessenen Umgebungsluftdruck berechnete Höhe bestimmt wird, und eine Berechnung der barometrischen Tendenz Stattfindet, welche das Ausfiltern bewegungsinduzierter Fehler umfasst.

10. Verfahren nach Anspruch 9, **dadurch gekennzeichnet, dass** falls ein erfasster Gradientenwert unterhalb des Grenzwerts liegt die angezeigte Höhe um eine dem erfassten Gradientenwert entsprechende Höhendifferenz korrigiert wird.

**11.** Verfahren nach Anspruch 9 oder Anspruch 10, **dadurch gekennzeichnet, dass** falls ein erfasster Gradientenwert unterhalb des Grenzwerts liegt, dieser Gradientenwert in einer Tendenzvariablen gespeichert wird und diese Tendenzvariable, falls ein später erfasster Gradientenwert oberhalb des Grenzwerts liegt, zur Kompensation der Höhenanzeige gegenüber Druckänderungen, die von Wetteränderungen bewirkt werden, herangezogen wird.

**12.** Verfahren nach einem der Ansprüche 9 bis 11, **dadurch gekennzeichnet, dass** der erfasste Gradientenwert der zeitlichen Änderung des Umgebungsluftdrucks über die jeweiligen letzten fünf Minuten entspricht.

**13.** Verfahren nach Anspruch 11 oder Anspruch 12, **dadurch gekennzeichnet, dass** mehrere in aufeinanderfolgenden Zeiträumen erfasste Gradientenwerte, die unterhalb des Grenzwerts liegen, in Tendenzvariablen gespeichert werden und, falls ein später erfasster Gradientenwert oberhalb des Grenzwerts liegt, ein Mittelwert der gespeicherten Tendenzvariablen gebildet wird und zur Kompensation der Höhenanzeige herangezogen wird.

**14.** Verfahren nach einem der Ansprüche 9 bis 13, **dadurch gekennzeichnet, dass** eine Kompensation der Höhenanzeige gegenüber Druckblaseneffekten durchgeführt wird, wobei geprüft wird, ob die erfassten Gradientenwerte für eine Zeitdauer, die in einem definierten Bereich liegt, in einem definierten Wertebereich liegen und wenn dies der Fall ist, die Höhenanzeige um eine diesen erfassten Gradientenwerten entsprechende Höhendifferenz kompensiert wird.

**15.** Verfahren nach einem der Ansprüche 1 bis 14, **dadurch gekennzeichnet, dass** ein jeweiliger Gradientenwert durch Addition von bei mehreren, in vorgegebenen Intervallen durchgeführten Einzelmessungen erfassten Werten, die der jeweiligen Änderung des Umgebungsluftdrucks entsprechen, bestimmt wird.

**16.** Verfahren nach Anspruch 15, **dadurch gekennzeichnet, dass** in einem Normalmodus jede Sekunde eine Einzelmessung durchgeführt wird.

**17.** Verfahren nach Anspruch 15 oder Anspruch 16, **dadurch gekennzeichnet, dass** in einem Energiesparmodus alle zwei Minuten eine Einzelmessung durchgeführt wird.

**18.** Verfahren nach einem der Ansprüche 1 bis 17, **dadurch gekennzeichnet, dass** der Grenzwert als vorbestimmter Wert in Metern pro Stunde oder Metern pro Minute in einer Nachschlagtabelle gespeichert ist, aus welcher er über einen Mikroprozessorzugriff ladbar ist.

**19.** Verfahren nach einem der Ansprüche 1 bis 18, **dadurch gekennzeichnet, dass** die Berechnung der barometrischen Tendenz das Filtern von temperaturinduzierten Fehlern umfasst.


**Claims**

**1.** Method of determining weather forecast readings, which comprises a temperature measurement, an ambient air pressure measurement and an evaluation of the ambient air pressure, for which repeatedly the gradient values, which correspond respectively to temporal change of the ambient air pressure, are detected, and the detected gradient values are compared each in relation to a threshold for differentiating between pressure changes, which are caused by altitude changes, and pressure changes, which are caused by weather changes, **characterised in that** for determining weather forecast readings, which are compensated in vertical movements, a calculation of the barometric trend is effected, which includes the operation of filtering out movement induced errors.

**2.** Method according to claim 1, **characterised in that** in case a detected gradient value is below the threshold, this gradient value is stored in a trend variable, and in case a later detected gradient value is above the threshold, it is not taken into account for the determination of the weather forecast reading and the stored trend variable is used for determining the weather forecast reading.

**3.** Method according to any one of claims 1 and 2, **characterised in that** the detected gradient value corresponds to temporal change of the ambient air pressure during the respective last 5 minutes.

**4.** Method according to any one of claims 2 and 3, **characterised in that** in successive time intervals, several detected gradient values, which are below the threshold, are stored as trend variables, and in case a later detected gradient value is above said threshold, a mean value of trend variables is established, which is used for determining the weather forecast reading.

5. Method according to any one of claims 2 to 4, **characterised in that** for determining the weather forecast reading by a repeated detection of gradient values, which correspond each to temporal change of the ambient air pressure, a weather trend variable is searched for which gradient values are respectively added to weather trend variables for the detection of gradient values, which are below the threshold, and values obtained from the stored trend variables are added to the weather trend variables for the detection of gradient values, which are above the threshold.

6. Method according to claim 5, **characterised in that** the weather trend variables are each sampled during one hour.

7. Method according to any one of claims 5 and 6, **characterised in that** the determination of the weather forecast reading is compensated from pressure changes caused by sun effects, for which a sum of weather trend variables is carried out during a time period of 24h.

8. Method according to claim 7, **characterised in that** a weather forecast reading is respectively determined after one hour, for which it is taken into account for determining the weather forecast reading only the change of a change value caused by the sun effect for compensating barometric trend variables sampled during one hour compared to sun effects.

9. Method of determining altitude readings, which comprises a temperature measurement, an ambient air pressure measurement and an evaluation of the ambient air pressure, for which repeatedly the gradient values, which correspond respectively to temporal change of the ambient air pressure, are detected, and the detected gradient values are compared each in relation to a threshold for differentiating between pressure changes, which are caused by altitude changes, and pressure changes, which are caused by weather changes, **characterised in that** for determining altitude readings, which are compensated in a barometric manner in relation to atmospheric pressure changes, which are caused by weather changes, a correction value is determined for the calculated altitude of the measured ambient air pressure, and **in that** a calculation of the barometric trend is effected, which includes the operation of filtering out movement induced errors.

10. Method according to claim 9, **characterised in that** in case a detected gradient value is below the threshold, the indicated altitude is corrected around an altitude difference corresponding to the detected gradient value.

11. Method according to any one of claims 9 and 10, **characterised in that** in case the detected gradient value is below the threshold, this gradient value is stored as a trend variable and this trend variable is used in case a later detected gradient value is above the threshold for compensating the altitude reading in relation to pressure changes, which are caused by weather changes.

12. Method according to any one of claims 9 to 11, **characterised in that** the detected gradient value corresponds to the temporal change of the ambient air pressure during the respective last 5 minutes.

13. Method according to any one of claims 11 and 12, **characterised in that** in successive time intervals, several detected gradient values, which are below the threshold, are stored as trend variables, and in case a later detected gradient value is above the threshold, a mean value of the trend variables is established and used for compensating the altitude reading.

14. Method according to any one of claims 9 to 13, **characterised in that** a compensation of the altitude reading is carried out compared to pressure bubble effects, which is checked, if the detected gradient values during a time period, which is in a defined field, are in a defined value field, and when it is the case, the altitude reading is compensated around an altitude difference corresponding to these detected gradient values.

15. Method according to any one of claims 1 to 14, **characterised in that** a respective gradient value is determined in given intervals by adding several detected values of executed single measurements, which correspond to respective change of the ambient air pressure.

16. Method according to claim 15, **characterised in that** in a run mode, a single measurement is executed each second.

17. Method according to any one of claims 15 and 16, **characterised in that** in a standby mode, a single measurement is executed each 2 minutes.

**18.** Method according to any one of claims 1 to 17, **characterised in that** the threshold value is stored as a predestined value in meter by hour or in meter by minute in a table to be examined, whereas it can be loaded through a microprocessor link.

**19.** Method according to any one of claims 1 to 18, **characterised in that** the calculation of the barometric trend includes the operation of filtering temperature induced errors.


**Revendications**

**1.** Procédé de détermination d'indications des conditions météo, qui comprend une mesure de température, une mesure de la pression d'air ambiante et une évaluation de la pression d'air ambiante, pour lequel les valeurs du gradient à répétition, qui correspondent respectivement au changement dans le temps de la pression d'air ambiante, sont détectées et les valeurs du gradient détectées sont comparées chacune par rapport à un seuil pour différencier entre des changements de pression, qui sont causés par des changements d'altitudes, et des changements de pression, qui sont causés par des changements du temps, **caractérisé en ce que** pour déterminer les indications des conditions météo, qui sont compensées dans des mouvements verticaux, un calcul de la tendance barométrique est effectué, qui comprend le filtrage des erreurs induites par le mouvement.

**2.** Procédé selon la revendication 1, **caractérisé en ce que** au cas où une valeur de gradient détectée se trouve au-dessous du seuil, cette valeur de gradient est enregistrée dans une variable de tendance et, au cas où cette valeur de gradient se trouve plus tard au-dessus du seuil, il n'en est pas tenu compte pour la détermination de l'indication des conditions météo et la variable de tendance enregistrée est utilisée pour la détermination de l'indication des conditions météo.

**3.** Procédé selon l'une des revendications 1 et 2, **caractérisé en ce que** la valeur de gradient détectée correspond au changement temporel de la pression d'air ambiante pendant les dernières 5 minutes respectives.

**4.** Procédé selon l'une des revendications 2 et 3, **caractérisé en ce que** plusieurs valeurs de gradient détectées dans des intervalles temporels successifs, qui se trouvent au-dessous du seuil, sont enregistrées dans des variables de tendance et, au cas où une valeur de gradient détecté se trouve plus tard au-dessus du seuil, une valeur moyenne des variables de tendance est établie, qui est utilisée pour la détermination de l'indication des conditions météo.

**5.** Procédé selon l'une des revendications 2 à 4, **caractérisé en ce que** pour la détermination de l'indication des conditions météo à travers une détection répétée des valeurs de gradient, qui correspondent chacune au changement temporel de la pression d'air ambiante, une variable de tendance du temps est recherchée pour laquelle pour la détection des valeurs de gradient, qui se trouvent sous le seuil, des valeurs de gradient sont respectivement additionnées aux variables de tendance du temps, et pour la détection des valeurs de gradient qui se trouvent au-dessus du seuil, des valeurs obtenues des variables de tendance enregistrées sont additionnées aux variables de tendance du temps.

**6.** Procédé selon la revendication 5, **caractérisé en ce que** les variables de tendance du temps sont chacune échantillonnées pendant une heure.

**7.** Procédé selon l'une des revendications 5 et 6, **caractérisé en ce que** la détermination de l'indication des conditions météo est compensée des changements de pression causés par les effets du soleil, pour laquelle une somme des variables de tendance du temps est effectuée sur une période de 24h.

**8.** Procédé selon la revendication 7, **caractérisé en ce qu'**une indication des conditions météo est déterminée respectivement après une heure, pour lequel il est tenu compte pour la compensation des variables de tendance barométrique échantillonnées pendant une heure comparé aux effets du soleil seulement du changement d'une valeur de changement affectée par l'effet du soleil pour déterminer l'indication des conditions météo.

**9.** Procédé de détermination d'indications d'altitudes, qui comprend une mesure de température, une mesure de la pression d'air ambiante et une évaluation de la pression d'air ambiante, pour lequel des valeurs de gradient à répétition, qui correspondent respectivement au changement temporel de la pression d'air ambiante, sont détectées et les valeurs de gradient détectées sont comparées à un seuil pour différencier entre des changements de pression, qui sont causés par des changements d'altitudes, et des changements de pression, qui sont causés par des changements du temps, **caractérisé en ce que** pour déterminer les indications d'altitudes, qui sont compensées barométriquement en relation aux changements de la pression atmosphérique, qui sont causés par des changements du temps, une valeur de correction est déterminée pour l'altitude calculée de la pression d'air ambiante mesurée, et **en ce qu'**un calcul de la tendance barométrique est effectué, qui comprend le filtrage des erreurs induites par le mouvement.

10. Procédé selon la revendication 9, **caractérisé en ce que** au cas où une valeur de gradient détectée se trouve au-dessous du seuil, l'altitude indiquée est corrigée autour d'une différence d'altitude correspondante à la valeur de gradient détectée.

11. Procédé selon l'une des revendications 9 et 10, **caractérisé en ce que** au cas où une valeur de gradient détectée se trouve au-dessous du seuil, cette valeur de gradient est enregistrée dans une variable de tendance et cette variable de tendance est utilisée au cas où une valeur de gradient détectée plus tard se trouve au-dessus du seuil, pour la compensation de l'indication d'altitude vis-à-vis des changements de pression, qui sont causés par des changements du temps.

12. Procédé selon l'une des revendications 9 à 11, **caractérisé en ce que** la valeur de gradient détectée correspond au changement temporel de la pression d'air ambiante pendant les dernières 5 minutes respectives.

13. Procédé selon l'une des revendications 11 et 12, **caractérisé en ce que** plusieurs valeurs de gradient détectées dans des intervalles temporels successifs, qui se trouvent au-dessous du seuil, sont enregistrées dans des variables de tendance et, au cas où une valeur de gradient détectée plus tard se trouve au-dessus du seuil, une valeur moyenne des variables de tendance est établie, et est utilisée pour la compensation de l'indication d'altitude.

14. Procédé selon l'une des revendications 9 à 13, **caractérisé en ce qu'**une compensation de l'indication de l'altitude est exécutée vis-à-vis des effets de bulles de pression, ce qui est examiné, si les valeurs de gradient détectées pendant une durée de temps, qui se trouve dans un domaine déterminé, se trouvent dans un domaine de valeurs définies, et lorsque c'est le cas, l'indication d'altitude est compensée autour d'une différence d'altitude correspondante à ces valeurs de gradient détectées.

15. Procédé selon l'une des revendications 1 à 14, **caractérisé en ce qu'**une valeur de gradient respective est déterminée par l'addition, dans des intervalles donnés, de plusieurs valeurs détectées de mesures uniques exécutées, qui correspondent au changement respectif de la pression d'air ambiante.

16. Procédé selon la revendication 15, **caractérisé en ce que** dans un mode normal, une mesure unique est exécutée chaque seconde.

17. Procédé selon l'une des revendications 15 et 16, **caractérisé en ce que** dans un mode d'économie d'énergie, une mesure unique est exécutée toutes les 2 minutes.

18. Procédé selon l'une des revendications 1 à 17, **caractérisé en ce que** la valeur seuil est enregistrée comme valeur prédestinée en mètres par heure ou en mètres par minute dans une table à consulter, alors qu'elle peut être chargée à travers un accès à un microprocesseur.

19. Procédé selon l'une des revendications 1 à 18, **caractérisé en ce que** le calcul de la tendance barométrique comprend le filtrage des erreurs induites par la température.

Fig. 1

Fig. 2A

EP 0 996 004 B1

*Fig. 2B*

~ 38

| MCP (Master-Steuerungsprogramm) | 41 |

| Höhe | 42 |

| ausf_blase | 220 |

| prüf_blase | 234 |

| prüf_bewegung | 43 |

| calc_Kdata | 44 |

| anpass_blase | 222 |

| Baro_Druck | 45 |

| Calc_Baro_tendenz | 46 |

| aktual_5min_feld | 47 |

| calc_20/4tendenz | 48 |

| calc_vario | 49 |

| ausf_1stunde | 50 |

| calc_baro_änd | 51 |

| anpass_SI_Zähler | 610 |

| Calc_new_Logo | 52 |

*Fig.* 3

Fig. 4

EP 0 996 004 B1

EP 0 996 004 B1

**178**

Anzeige Druck **180**

| Anzeige SSCIC | 181 |

| Prüfung Grenzen | 182 |

| Ausführung La Grange | 183 |

| HÖHE | 42 |

| BARODRUCK | 45 |

ENDE **186**

*Fig. 5*

**189**

Anzeige Temperatur **190**

| Anzeige SSCIC | 191 |

| Prüfung Grenzen | 192 |

N — dTemp 0,125°C **193**

| Einstellung temp_zähler | 194 |

| Temp.-Kompensation | 195 |

ENDE **195**

*Fig. 6*

```
        ⌜‾‾‾‾‾⌐
       (   Höhe   )
        ⌞_____⌟
           └── 210        ← 42
           │
     ┌─────────────┐
     │ calc_alti_iau │── 211
     └─────────────┘
           │
     ┌───────────────┐
     │ speichern alti_iau │── 212
     └───────────────┘
           │
     ┌─────────────┐
     │ calc delta_iau │── 213
     └─────────────┘
           │
  NEIN     ◇
 ┌─────────  temp-Zähler
 │           ◇ 0 ?      ── 214
 │              │ JA
 │              │
┌──────────────────┐   ┌──────────────┐
│ delta_iau += save_data │── 217   │ temp_zähler— │── 215
└──────────────────┘   └──────────────┘
 │                         │
┌──────────────┐        ┌──────────────┐
│ save_data = 0 │── 218  │ save_delta + │── 216
└──────────────┘        │ = delta_iau   │
 │                      └──────────────┘
┌─────────────────────┐   │
│ Alti_tendenz +=delta_iau │── 219
└─────────────────────┘
 │                        │
 └────────────┬───────────┘
              │
       Zu ausf_blase 220
```

*Fig. 7A*

von 216 & 219

ausf_blase — 220

NEIN

5-Minuten-zyklus? — 221

JA

prüf_bewegung — 43

calc_KDATA — 44

anpass_blase — 222

löschen Alti_tendenz — 223

löschen blase_25 — 224

wiederherst. alti_iau — 225

BEENDEN — 226

*Fig. 7B*

220

```
┌─────────────────┐
│   ausf_blase    │──╮ 230
└─────────────────┘

        ◇
NEIN  Blase
      und      ──╮ 231
      2.5 min

       JA
┌─────────────────┐
│  blase_zähler++ │──╮ 232
└─────────────────┘

┌─────────────────┐
│ laden delta_2,5min │──╮ 233
└─────────────────┘

┌─────────────────┐
│   prüf_blase    │──╮ 234
└─────────────────┘

        ◇
NEIN  2,5min?    ──╮ 235


┌─────────────────┐
│ löschen 2,5min Marke │──╮ 236
└─────────────────┘

   ( BEENDEN )──╮ 237
```

Fig. 76

234

```
                    ┌──────────────────┐
                    │    prüf_blase     │── 240
                    └──────────────────┘
                              │
                             ╱╲
                            ╱  ╲
                    NEIN   ╱ In ╲   JA
                    ◄─────╱Toleranz╲─────►
                          ╲   ?   ╱
                           ╲     ╱── 241
                            ╲   ╱
                             ╲ ╱
```

|                          |                                |
| löschen_blase ── 242     | blase_sum+=blase_25 ── 243     |

```
            ╱╲
           ╱  ╲
    NEIN  ╱ 2< ╲
   ◄─────╱Blasen-╲── 244
         ╲Zähler ╱
          ╲ <10 ╱
           ╲   ╱
            ╲ ╱
             │
    ┌──────────────────┐
    │ k_data +=blase_sum │── 245
    └──────────────────┘
             │
         ╭─────────╮
         │ BEENDEN │── 246
         ╰─────────╯
```

*Fig. 7D*

28

222

anpass_blase — 250

Blase
aktiv
?
— 251

NEIN

JA

blase_sum -= alti_tendenz — 252

BEENDEN — 253

*Fig. 7E*

_Fig. 9_

_Fig. 8_

45

Baro_Druck — 300

$$BT_{5min}{}^{+}= Delta\_ipu$$ — 301

NEIN

5 min — 302

JA

calc_Baro_tendenz — 46

NEIN

1 Stunde — 304

JA

calc_neu_logo — 51

BEENDEN — 306

*Fig. 10*

46

calc_baro_tendenz

310

**NEIN**    Bewegung    311

JA

$BT_{5min}=20/4tendenz$    312

20-Minutenzeitn. starten    313

$tendenz(6,7)=BT_{5in}$    314

$BT_{1Stunde}+=tendenz(6,7)$    315

5-Minutenfeld aktual.    47

calc_20/4tendenz    48

calc Vario    49

Bewegungs-, Tempdiff-Marke löschen    319

**NEIN**    1Stunde    320

JA

ausf_1stunde    50

*Fig. 11*

BEENDEN    322

*Fig. 13*

Flowchart 49:
- calc_Vario (380)
- negative Marke löschen (381)
- Σ 5min_Feld → Vario (382)
- Vario < 0 (383)
- negative Marke setzen (385)
- BEENDEN (385)

*Fig. 12*

Flowchart 48:
- calc_20/4tendenz (350)
- letzten vier 5-Minutentendenzen hinzuf. (351)
- SUM → 20/4TENDENZ (352)
- 20/4tendenz / 4 → 20/4tendenz (353)
- BEENDEN (354)

Fig. 14

Fig. 15

Fig. 16

700 anpass_SL_zähler

701 BT_stunde >= 0.0hPa

610

703 SL_max_zähler2 – 0

NEIN

NEIN

JA

JA

702 SL_max_zähler1 = 0

JA

NEIN

704 0 → Baro_Änd

705 Baro_Änd = BT_stunde

707 SL_max_zähler2 -=OP2

706 SL_max_zähler1 -=OP2

708 BEENDEN

Fig. 17

*Fig. 18A*

PROTOKOLLFUNKTION

| | |
|---|---|
| **3123"** dsc | Summe Abstiege |
| **4783"** ASC | Summe Aufstiege |
| **352"** ALO | Niedrigste Reisehöhe |
| **4876"** AHI | Höchste Reisehöhe |

BERGSTEIGEN

**KORREKTUR DER AKTUELLEN HÖHE**

**4876"** 9:30

HAUPTANZEIGE
AKTUELLE HÖHE
UHRZEIT

SUBFUNKTION

| | |
|---|---|
| **1660"** 76 | Temperatur |
| **1660"** 2:30 | START STOP Stoppuhr |
| **1660"** 2.3 | Anstiegs/ Abstiegs- geschw |
| **1660"** 102 | Höhe Zuwachsverluste |

*Fig. 18B*

In anderen
Modus wechseln
Gedrückt halten
Daten in den Funktionen
Sub/PROTOKOLL
zuckstellen
Gleichzeig
Drücken

Shortcuts
Um von der PROTOKOLL-Funktion
zur Hauptanzeige zurückzukehren
den C-Modus-Knopf drücken. Um von
der Sub-Funktion in die Hauptanzeige
zurückzukehren den B & D-Knopf drücken.

*Fig. 18C*

38

899

**905**

CPU

DRUCK IN **hPa**/20

TEMPERATUR IN °C/10

ZEIT IN s/100

**906**

DRUCK
TEMP.
ZEIT

**904**

HARD & SOFTWARE HYBRID GENERIERT

TEMPERATUR UND TEMPERATUF KOMPENSIERTE DRUCKMESSUNG

**901** EINGABE1

UMG. DRUCK
UMG. TEMP.
ZEIT

**902** EINGABE II

EFFEKTE VON
SONNE
TEMPERATUR
WETTER
DRUCKBLASE
NUTZORT

TO 907

*Fig. 19A*

*Fig. 19*

*Fig. 19A*

*Fig. 19B*

*Fig. 19C*

VON 906

903 — **EINGABE III**    907 —    908 —

| 903 EINGABE III | 907 | 908 |
|---|---|---|
| NACHSCHLAG-TABELLE MIT: DRUCK-GRADIENT GRENZWERTE FÜR BEWEGUNG >33CM/MIN DRUCKBLASE <2M/MIN UBER 5 ZU | BERECHNUNG VON BARO-TREND & UNTERSCHEIDEN ZWISCHEN BEWEGUNG, DRUCKBLASE UND STATIONÄRE VERWENDUNG UND MARKEN SETZEN | HÖHENÄNDERUNGEN INFOLGE TEMPERATUR-ÄNDERUNGEN KOMPENSIEREN HÖHE BERECHNEN UND MIT ÜBER 5 MIN GEMITTELTEM BARO-TREND KOMPENSIEREN |

TO 909

*Fig. 19B*

EP 0 996 004 B1

VON 908

910

909

WENN
BEWEGT

N

N

WENN
STATIONÄR

N

EINGABE IV

911

914

WENN
ZEITABLAUF
AUF DRUCK-
BLASE

912

913

NACHSCHLAG-
TABELLE MIT:

SONNEN-LIMITS,
DRUCKDIFFERENZEN
FÜR LOGOWECHSEL,
ABHÄNGIG VON
NUTZUNGSORT
(HÖHE ASL)

LETZTEN GÜLTIGEN,
ÜBER 20 MIN GEMITTELTEN
BARO-TREND VERWENDEN,
UM HÖHE ZU
KOMPENSIEREN

SONNENEFFEKT-KOMPENSIERTEN,
ÜBER 6 MIN GEMITTELTEN
BARO-TREND BERECHNEN,
UM WETTERLOGO ZU
WECHSELN

915

STATIONÄRE MARKE
SETZEN UND HÖHEN-
MESSUNG ENTSPRECHEND
KORRIGIEREN

916

ENDE

*Fig. 19C*

EP 0 996 004 B1